# FASCICULE DE BREVET EUROPEEN

(11) **EP 4 111 042 B1**
(45) Date de publication et mention de la délivrance du brevet: **26.03.2025**
(21) Numéro de dépôt: 21711615.1
(22) Date de dépôt: 18.02.2021
(51) Int. Cl.: F02C 7/32, F02C 7/36, F01D 15/10

(54) **TURBOMACHINE A DOUBLE FLUX COMPRENANT AU MOINS UN ACCESSOIRE OU EQUIPEMENT**
BYPASSTURBINENMASCHINE MIT MINDESTENS EINEM ZUBEHÖR ODER AUSSTATTUNGSTEIL
BYPASS TURBINE ENGINE COMPRISING AT LEAST ONE ACCESSORY OR EQUIPMENT

(30) Priorité: 27.02.2020 FR 2001949
(43) Date de publication de la demande: 04.01.2023
(73) Titulaire: SAFRAN AIRCRAFT ENGINES, 75015 Paris (FR)
(72) Inventeur: BERGO, Claire Alexia, 77550 MOISSY-CRAMAYEL (FR)
(74) Mandataire: Brevalex
(86) Numéro de dépôt international: PCT/FR2021/050294
(87) Numéro de publication internationale: WO 2021/170942

(56) Documents cités:
- EP-A1- 3 282 093
- FR-A1- 3 016 408
- US-A1- 2006 101 804
- US-A1- 2008 006 023

## Description

### DOMAINE TECHNIQUE

L'invention se rapporte à une turbomachine à double flux comprenant au moins un accessoire ou équipement, tel qu'une pompe à huile, une pompe à carburant ou encore une pompe hydraulique.

### ÉTAT DE LA TECHNIQUE ANTÉRIEURE

De manière classique, une turbomachine à double flux comprend une soufflante destinée à aspirer un flux de gaz qui se divise, en aval de la soufflante, en un flux de gaz primaire circulant dans un canal d'écoulement de flux primaire, appelé veine primaire, au sein d'un cœur de la turbomachine s'étendant suivant un axe longitudinal de direction axiale, et en un flux de gaz secondaire contournant ce cœur dans un canal d'écoulement de flux secondaire, appelé veine secondaire.

Dans la veine primaire, le flux de gaz primaire traverse, d'amont en aval dans la direction axiale d'écoulement des gaz, un compresseur basse pression, un compresseur haute pression, une chambre de combustion, une turbine haute pression, une turbine basse pression et une tuyère d'échappement. Dans la veine secondaire, le flux d'air secondaire traverse un redresseur de soufflante.

Le compresseur basse pression et la turbine basse pression sont reliés par un premier arbre, dit arbre basse pression, tournant autour de l'axe longitudinal, tandis que le compresseur haute pression et la turbine haute pression sont reliés par un deuxième arbre, dit arbre haute pression, tournant autour de l'arbre basse pression. L'arbre basse pression et l'arbre haute pression font tous deux partie du cœur de la turbomachine.

Lorsque la turbomachine présente un taux de dilution relativement élevé, aussi appelé « BPR » pour « By-Pass Ratio » en terminologie anglo-saxonne, il peut être avantageux que la soufflante soit entraînée mécaniquement par l'arbre basse pression via un réducteur.

Afin de lubrifier et de refroidir ce réducteur, il est connu d'équiper la turbomachine d'un système de lubrification, notamment d'un circuit d'huile comprenant un réservoir d'huile et une pompe de lubrification qui est entraînée mécaniquement par une boîte de transmission, aussi appelée boîte de relais d'accessoires ou encore « AGB » pour « Accessory Gear Box » en terminologie anglo-saxonne, et qui prélève de la puissance mécanique à l'arbre haute pression par l'intermédiaire d'un arbre intermédiaire, appelé « RDS » pour « Radial Drive Shaft » en terminologie anglo-saxonne.

Le document US2006101804A1 divulgue par exemple une telle turbomachine de l'art antérieur.

Or, en phase de « windmilling » de la turbomachine qui correspond à une autorotation de la soufflante, la vitesse de rotation de l'arbre haute pression est faible par rapport à celle de l'arbre basse pression. La puissance mécanique prélevée sur l'arbre haute pression et transmise à la pompe à huile peut ainsi ne pas être suffisante pour permettre à la pompe à huile de délivrer l'huile requise à la lubrification et au refroidissement du réducteur qui est pourtant sollicité par l'autorotation de la soufflante et qui risque de ce fait d'être endommagé, voire même de casser.

Si la turbomachine ne comprend pas de réducteur, il est également possible qu'en phase de « windmilling » la pompe à huile tourne trop lentement pour délivrer toute l'huile requise à la lubrification et le refroidissement des paliers qui supportent les arbres haute et basse pression. Un système de lubrification auxiliaire, utilisant par exemple une deuxième pompe à huile, peut alors être requis. Il est généralement prévu une unique pompe à huile, mais son dimensionnement est impacté par les contraintes de la lubrification pendant les bas régimes de rotation de l'arbre haute pression.

Que la turbomachine comprenne ou non un réducteur, les contraintes de la lubrification pendant les bas régimes de rotation de l'arbre haute pression ont un impact important sur le dimensionnement, et donc l'encombrement et la masse, du système de lubrification entraîné par la puissance mécanique prélevée sur l'arbre haute pression.

Des difficultés semblables peuvent se retrouver en bas régimes concernant d'autres accessoires, tels qu'une pompe à carburant de la turbomachine.

### EXPOSÉ DE L'INVENTION

L'invention vise à pallier l'inconvénient mentionné ci-dessous, en proposant une turbomachine à double flux comprenant un arbre basse pression, un arbre haute pression et un ensemble générateur d'énergie électrique qui prélève de la puissance mécanique d'une part à l'arbre basse pression via un premier arbre intermédiaire, et d'autre part à l'arbre haute pression via un deuxième arbre intermédiaire, pour alimenter un ou plusieurs accessoires, tels qu'une pompe à huile, en énergie électrique.

Plus précisément, l'invention a pour objet une turbomachine à double flux selon la revendication 1 comprenant, d'amont en aval dans une direction axiale d'écoulement des gaz, une soufflante et un bec de séparation duquel sont issus un canal d'écoulement de flux primaire, dit veine primaire, et un canal d'écoulement de flux secondaire, dit veine secondaire, qui entoure la veine primaire, la turbomachine :
- un carter fixe comprenant un bras qui s'étend radialement, par rapport à l'axe longitudinal, dans la veine secondaire,
- un premier arbre, dit arbre basse pression, conçu pour tourner par rapport au carter autour d'un axe longitudinal orienté suivant la direction axiale d'écoulement des gaz,
- un deuxième arbre, dit arbre haute pression, conçu pour tourner par rapport au carter autour de l'arbre basse pression, les arbres haute pression et basse pression étant concentriques,
- au moins un accessoire entraîné par un moteur,
- une partie haute par l'intermédiaire de laquelle la turbomachine est destinée à être rattachée à un aéronef,
- une partie basse opposée suivant une direction verticale orthogonale à l'axe longitudinal, le bras s'étendant globalement verticalement, dans la partie basse, dans la veine secondaire,
- un premier arbre intermédiaire conçu pour prélever de la puissance mécanique sur l'arbre basse pression,
- un deuxième arbre intermédiaire conçu pour prélever de la puissance mécanique sur l'arbre haute pression,
- un ensemble générateur d'énergie électrique logé dans le bras et couplé d'une part au premier arbre intermédiaire et d'autre part au deuxième arbre intermédiaire, de sorte à recevoir de la puissance mécanique du premier arbre intermédiaire d'une part et du deuxième arbre intermédiaire d'autre part, l'ensemble générateur étant en outre conçu pour convertir la puissance mécanique reçue des premier et deuxième arbres intermédiaires en énergie électrique afin d'alimenter en énergie électrique le ou les moteurs entraînant le ou les accessoires, l'énergie électrique alimentant le ou les moteurs entraînant le ou les accessoires provenant ainsi simultanément de la puissance mécanique prélevée sur l'arbre basse pression et de la puissance mécanique prélevée sur l'arbre haute pression.

Selon des variantes de réalisation
- le premier et le deuxième arbres intermédiaires sont coaxiaux et conçus chacun pour tourner, indépendamment l'un de l'autre, par rapport au carter autour d'un même axe intermédiaire ;
- la veine secondaire est délimitée radialement, par rapport à l'axe longitudinal, par une virole externe et un moyeu interne du carter structurel, la virole externe et le moyeu étant concentriques et centrés sur l'axe longitudinal ;
- le bras, qui loge l'ensemble générateur, s'étend radialement, par rapport à l'axe longitudinal, entre la virole externe et le moyeu ;
- le bras loge, en amont dans la direction axiale d'écoulement des gaz, des servitudes et, en aval dans la direction axiale d'écoulement des gaz, l'ensemble générateur.

Selon l'invention:
- l'ensemble générateur comprend :
   ∘ un premier arbre d'entraînement conçu pour prélever de la puissance mécanique sur le premier arbre intermédiaire et pour tourner par rapport au carter autour d'un premier axe d'entraînement,
   ∘ un deuxième arbre d'entraînement conçu pour prélever de la puissance mécanique sur le deuxième arbre intermédiaire et pour tourner par rapport au carter autour d'un deuxième axe d'entraînement, les premier et deuxième arbres d'entraînement étant coaxiaux et conçus chacun pour tourner, dans un sens de rotation opposé, autour des premier et deuxième axes d'entraînement alors confondus,
   ∘ un ou plusieurs premiers alternateurs comprenant chacun un rotor inducteur monté solidaire en rotation avec l'un des premier et deuxième arbres d'entraînement autour des premier et deuxième axes d'entraînement et un rotor induit monté solidaire en rotation avec l'autre des premier et deuxième arbres d'entraînement autour des premier et deuxième axes d'entraînement,
   ∘ un ou plusieurs deuxièmes alternateurs comprenant chacun un rotor inducteur monté solidaire en rotation, autour des premier et deuxième axes d'entraînement, avec celui des premier et deuxième arbres d'entraînement qui est entouré par l'autre des premier et deuxième arbres d'entraînement, et un stator induit fixe par rapport au rotor inducteur dudit deuxième alternateur ;
- les premier et deuxième axes d'entraînement sont orientés globalement suivant la direction axiale d'écoulement des gaz ; et
- le ou les premiers alternateurs sont situés en amont suivant la direction axiale d'écoulement des gaz et le ou les deuxièmes alternateurs sont situés en aval suivant la direction axiale d'écoulement des gaz.

Selon d'autres variantes de réalisation:
- l'ensemble générateur comprend :
   ∘ un troisième arbre d'entraînement conçu pour prélever de la puissance mécanique sur le premier arbre d'entraînement et pour tourner par rapport au carter autour d'un troisième axe d'entraînement,
   ∘ un quatrième arbre d'entraînement conçu pour prélever de la puissance mécanique sur le deuxième arbre d'entraînement et pour tourner par rapport au carter autour d'un quatrième axe d'entraînement, les troisième et quatrième arbres d'entraînement étant coaxiaux et conçus pour chacun tourner, dans un sens de rotation opposé, autour des troisième et quatrième axes d'entraînement alors confondus,
   ∘ un ou plusieurs troisièmes alternateurs comprenant chacun un rotor inducteur monté solidaire en rotation avec l'un des troisième et quatrième arbres d'entraînement autour des troisième et quatrième axes d'entraînement et un rotor induit monté solidaire en rotation avec l'autre des troisième et quatrième arbres d'entraînement autour des troisième et quatrième axes d'entraînement,
   o un ou plusieurs quatrièmes alternateurs comprenant chacun un rotor inducteur monté solidaire en rotation, autour des troisième et quatrième axes d'entraînement, avec celui des troisième et quatrième arbres d'entraînement, et un stator induit fixe par rapport au rotor inducteur dudit quatrième alternateur ;
- l'axe longitudinal et les premier, deuxième, troisième et quatrième axes d'entraînement sont compris dans un même plan ;
- les troisième et quatrième axes d'entraînement sont respectivement parallèles aux premier et deuxième axes d'entraînement ;
- les premier et deuxième axes d'entraînement sont orientés globalement suivant la direction axiale d'écoulement des gaz, les troisième et quatrième arbres d'entraînement étant situés radialement à l'extérieur par rapport à l'axe longitudinal, tandis que les premier et deuxième arbres d'entraînement sont situés radialement à l'intérieur;
- le ou les premiers alternateurs et le ou les deuxièmes alternateurs sont respectivement logés dans un premier boîtier et dans un deuxième boîtier eux-mêmes logés dans le bras, le premier boîtier présentant une dimension transversale, prise suivant une direction transversale, globalement horizontale, perpendiculaire à la dimension axiale d'écoulement des gaz, supérieure à celle du deuxième boîtier ;
   et/ou
- le ou les troisièmes alternateurs et le ou les quatrième alternateurs sont respectivement logés dans le premier boîtier ou un troisième boîtier lui-même logé dans le bras et dans le deuxième boîtier ou un quatrième boîtier lui-même logé dans le bras, le troisième boîtier présentant une dimension transversale, prise suivant une direction transversale, globalement horizontale, perpendiculaire à la dimension axiale d'écoulement des gaz, supérieure à celle du quatrième boîtier ;
- le premier boîtier et/ou le troisième boîtier est agencé en contact avec une paroi du bras ;
- l'ensemble générateur comprend :
   ∘ un arbre interne d'entraînement conçu pour tourner par rapport au carter autour d'un axe d'entraînement et pour prélever de la puissance mécanique sur le premier arbre intermédiaire ou sur le deuxième arbre intermédiaire,
   ∘ un arbre externe d'entraînement conçu pour tourner par rapport au carter autour de l'arbre interne d'entraînement dans un sens de rotation opposé et pour prélever de la puissance mécanique sur le deuxième arbre intermédiaire ou sur le premier arbre intermédiaire, les arbres interne et externe d'entraînement étant concentriques,
   ∘ un ou plusieurs alternateurs comprenant chacun un corps interne, inducteur ou induit, monté solidaire en rotation avec l'arbre interne d'entraînement autour de l'axe d'entraînement et un corps externe, induit ou inducteur, monté solidaire en rotation avec l'arbre externe d'entraînement autour de l'axe d'entraînement et situé en regard du corps interne ;
- l'axe d'entraînement est orienté globalement radialement par rapport à l'axe longitudinal ;
   ou
- l'axe d'entraînement est orienté globalement suivant la direction axiale d'écoulement des gaz.

Selon d'autres variantes non revendiquées:
- la turbomachine comprend en outre un système de régulation par l'intermédiaire duquel l'ensemble générateur délivre de l'énergie électrique à l'accessoire ou aux accessoires ;
- la veine secondaire est séparée de la veine primaire par un compartiment inter-veine dans laquelle le ou les accessoires sont logés ;
- le ou les accessoires sont choisis parmi :
   ∘ une pompe à huile,
   ∘ une pompe à carburant,
   ∘ une pompe hydraulique.

### BRÈVE DESCRIPTION DES DESSINS

D'autres aspects, buts, avantages et caractéristiques de l'invention apparaîtront mieux à la lecture de la description détaillée suivante de formes de réalisation préférés de celle-ci, donnée à titre d'exemple non limitatif, et faite en référence aux dessins annexés sur lesquels :
- la figure 1 est une vue schématique, en coupe longitudinale, d'une turbomachine à double flux selon un premier mode de réalisation de l'invention ;
- la figure 2 est une vue schématique, en coupe longitudinale, d'une turbomachine à double flux selon un deuxième mode de réalisation de l'invention ;
- la figure 3 est une vue schématique, en coupe longitudinale, d'une turbomachine à double flux selon un troisième mode de réalisation de l'invention ;
- la figure 4 est une vue schématique, en coupe tangentielle, d'un bras de la turbomachine illustré à la figure 1.

### DESCRIPTION DÉTAILLÉE

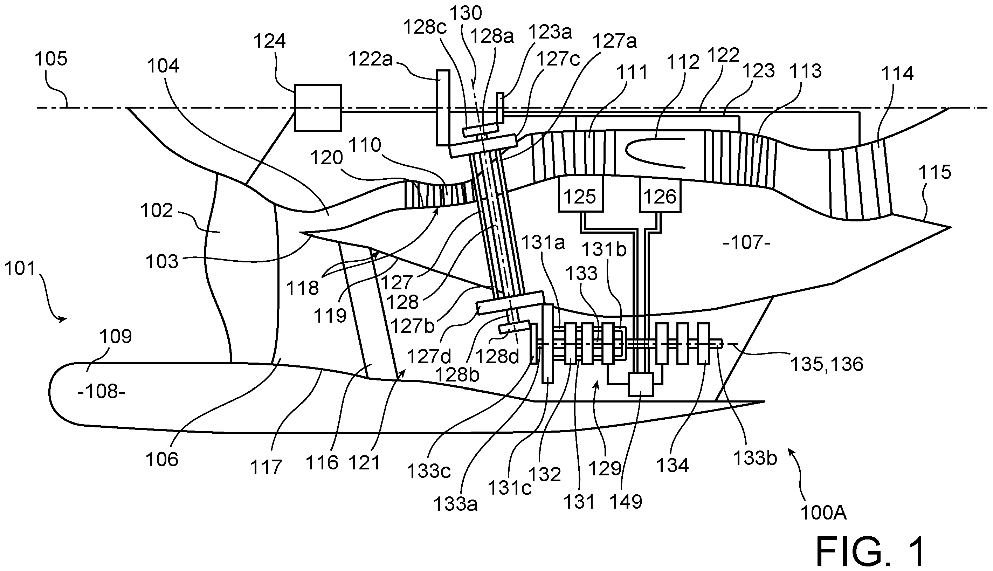

Les figures 1 à 3 montrent une turbomachine à double flux 100A, 100B, 100C d'aéronef respectivement selon un premier, un deuxième et un troisième mode de réalisation de l'invention. Les composants communs à ces trois modes de réalisation de l'invention portent les mêmes références.

A titre préliminaire, il est défini une direction axiale, une direction radiale qui est orthogonale à la direction axiale et une direction circonférentielle qui est orthogonale aux directions axiale et radiale.

Dans la suite de la description, les termes « amont » et « aval » sont employés en référence à la direction axiale d'écoulement des gaz.

Il est aussi défini une direction verticale, orthogonale à la direction longitudinale et orientée de bas en haut.

La turbomachine 100A, 100B, 100C comprend, d'amont en aval, une entrée d'air 101, une soufflante 102 et un bec de séparation 103 duquel sont issus un canal d'écoulement de flux primaire 104 annulaire, appelé veine primaire, ménagé au sein d'un cœur de la turbomachine 100A, 100B, 100C s'étendant suivant un axe longitudinal 105 orienté axialement, et un canal d'écoulement de flux secondaire 106 annulaire, appelé veine secondaire, entourant la veine primaire 104 et séparé de la veine primaire 104 par un compartiment inter-veine 107. La veine primaire 104 et la veine secondaire 106 sont centrées sur l'axe longitudinal 105.

La turbomachine 100A, 100B, 100C est en outre carénée par une nacelle 108 qui entoure la veine secondaire 106 et qui est destinée à être fixée à l'aéronef au niveau de sa partie haute. La nacelle 108 comprend notamment un carter de soufflante 109 qui entoure la soufflante 102 et qui définit, en amont de la soufflante 102, l'entrée d'air 101.

La veine primaire 104 comprend elle-même, d'amont en aval, un compresseur basse pression 110, un compresseur haute pression 111, une chambre de combustion 112, une turbine haute pression 113, une turbine basse pression 114 et une tuyère d'échappement 115. La veine secondaire 106 comprend un redresseur de soufflante 116, aussi appelé « OGV » pour « Outlet Guide Vane » en terminologie anglo-saxonne.

La turbomachine 100A, 100B, 100C comprend encore un carter 117, 118, 121 fixe comprenant lui-même une virole externe 117 et un moyeu 118 interne situé en aval du bec de séparation 103. La virole externe 117 et le moyeu 118 sont concentriques et centrés sur l'axe longitudinal 105.

Le moyeu 118 comprend une paroi annulaire externe 119 qui délimite, avec la virole externe 117, la veine secondaire 106 et une paroi annulaire interne 120 qui délimite la veine primaire 104. La virole externe 117 entoure ainsi la veine secondaire 106 qui entoure le moyeu 118. Le moyeu 118 entoure lui-même la veine primaire 104.

La virole externe 117 forme ainsi en partie la nacelle 108. Elle est par exemple située en aval du carter de soufflante 109.

La paroi annulaire externe 119 et la paroi annulaire interne 120 délimitent en outre ensemble le compartiment inter-veine 107.

Le carter comprend aussi une pluralité de bras 121 qui s'étendent radialement, par rapport à l'axe longitudinal 105, entre la virole externe 117 et le moyeu 118, notamment la paroi annulaire externe 119 du moyeu 118, et qui sont répartis de manière régulière autour de l'axe longitudinal 105.

L'un des bras 121 est par exemple situé à 6h par analogie avec le cadran d'une horloge. Autrement dit, ce bras 121 est situé en partie basse de la turbomachine 100A, 100B, 100C et s'étend à la fois radialement et verticalement entre la virole externe 117 et le moyeu 118.

Les bras 121 forment par exemple eux-mêmes des aubes du redresseur de soufflante 116. En variante (non représentée), les bras 121 sont situés en aval du redresseur de soufflante 116.

Les bras 121 peuvent loger des servitudes (non représentées), telles que des conduits, des canalisations, des harnais électriques, etc.

La turbomachine 100A, 100B, 100C comprend aussi un premier arbre 122, dit arbre basse pression, conçu pour tourner par rapport au carter 117, 118, 121 autour de l'axe longitudinal 105, ainsi qu'un deuxième arbre 123, dit arbre haute pression, conçu pour tourner par rapport au carter 117, 118, 121 autour de l'arbre basse pression 122. Les arbres basse et haute pression 122, 123 sont concentriques.

L'arbre basse pression 122 et l'arbre haute pression 123 font tous deux partie du cœur de la turbomachine 100.

Par exemple, l'arbre basse pression 122 relie le compresseur basse pression 110 et la turbine basse pression 114, tandis que l'arbre haute pression 123 relie le compresseur haute pression 111 et la turbine haute pression 113.

L'arbre basse pression 122 entraîne aussi la soufflante 102 en rotation autour de l'axe longitudinal 105, par rapport au carter 117, 118, 121, par exemple par l'intermédiaire d'un réducteur 124. La soufflante 102 est ainsi entraînée indirectement par l'arbre basse pression 122. En variante (non représentée), la soufflante 102 peut être entraînée directement par l'arbre basse pression 122.

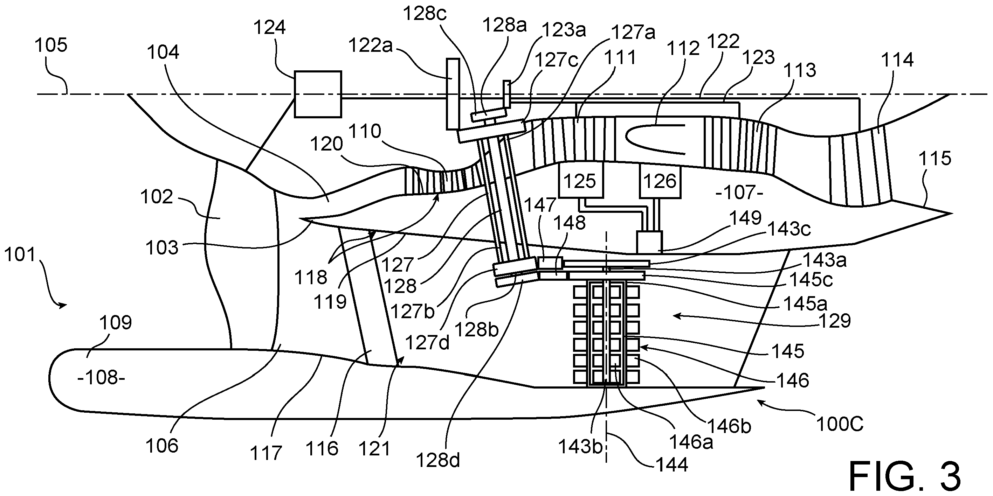

L'arbre basse pression 122 et l'arbre haute pression 123 sont par exemple conçus pour tourner autour de l'axe longitudinal 105 dans le même sens de rotation. C'est notamment le cas des arbres basse et haute pression 122, 123 de la turbomachine 100C du troisième mode de réalisation (figure 3). En variante, l'arbre basse pression 122 et l'arbre haute pression 123 sont conçus pour tourner autour de l'axe longitudinal 105 dans des sens de rotation opposés.

La turbomachine 100A, 100B, 100C est en outre équipée d'un ou plusieurs accessoires ou équipements, tels qu'une pompe à huile 125, une pompe à carburant 126 ou encore une pompe hydraulique. Bien sûr, cette liste n'est pas exhaustive.

La pompe à huile 125 est par exemple conçue pour délivrer de l'huile provenant d'un réservoir d'huile (non représenté) au réducteur 124, et/ou à des paliers (non représentés) qui supportent les arbres basse et haute pression 122, 123 et qui sont portés par le carter 117, 118, 121. La pompe à huile 125 permet ainsi d'assurer la lubrification et le refroidissement du réducteur 124 et/ou des paliers, et donc le refroidissement de la turbomachine 100A, 100B, 100C.

La pompe à carburant 126 est par exemple conçue pour délivrer du carburant à la chambre de combustion 112 pour la combustion des gaz au sein de ladite chambre de combustion 112.

Le ou les accessoires 125, 126 sont en outre conçus pour être entraîné mécaniquement par un moteur (non représenté) alimenté en énergie électrique. Ce moteur est ainsi conçu pour entraîner en mouvement une partie mobile de l'accessoire 125, 126, par exemple une partie tournante comme le rotor d'une pompe. Ce moteur peut être intégré à l'accessoire 125, 126, le moteur et l'accessoire 125, 126 qu'il entraîne formant ainsi un ensemble monobloc. En variante, le moteur peut être indépendant ou encore séparé du ou des accessoires 125, 126 qu'il entraîne.

Les accessoires 125, 126 sont par exemple logés dans le compartiment inter-veine 107. En variante (non représentée), les accessoires 125, 126 sont logés dans la nacelle 108. Encore en variante (non représentée), une partie des accessoires 125, 126 est logée dans le compartiment inter-veine 107 et une autre partie des accessoires 125, 126 est logée dans la nacelle 108.

Selon l'invention, la turbomachine 100A, 100B, 100C comprend en outre un premier arbre intermédiaire 127 conçu pour prélever de la puissance mécanique sur l'arbre basse pression 122, un deuxième arbre intermédiaire 128 conçu pour prélever de la puissance mécanique sur l'arbre haute pression 123 et un ensemble générateur 129 d'énergie électrique couplé d'une part au premier arbre intermédiaire 127 et d'autre part au deuxième arbre intermédiaire 128, de sorte à recevoir de la puissance mécanique du premier arbre intermédiaire 127 d'une part et du deuxième arbre intermédiaire 128 d'autre part.

L'ensemble générateur 129 est en outre conçu pour convertir la puissance mécanique reçue des premier et deuxième arbres intermédiaires 127, 128 en énergie électrique et pour alimenter en énergie électrique le ou les moteurs entraînant le ou les accessoires 125, 126, tels que la pompe à huile 125 et/ou la pompe à carburant 126.

De cette manière, l'énergie électrique fournie à l'accessoire ou aux accessoires 125, 126, par l'intermédiaire du ou des moteurs qui le ou les entraînent, provient simultanément de la puissance mécanique prélevée sur l'arbre basse pression 122 et de la puissance mécanique prélevée sur l'arbre haute pression 123.

Ainsi, en phase de « windmilling » de la turbomachine 100A, 100B, 100C qui correspond à une autorotation de la soufflante 102, même si l'arbre haute pression 123 tourne moins vite que l'arbre basse pression 122, la puissance mécanique totale prélevée sur l'arbre basse pression 122 et sur l'arbre haute pression 123 est suffisante pour alimenter en énergie électrique le ou les accessoires 125, 126 via le ou les moteurs qui le ou les entraînent. Cela permet notamment de s'assurer que la pompe à huile 125 délivre l'huile requise à la lubrification et au refroidissement du réducteur 124 qui est sollicité par l'autorotation de la soufflante 102 et qui risquerait sinon d'être endommagé, voire même de casser.

Ainsi, en fonction de la phase de fonctionnement de la turbomachine 100A, 100B, 100C, l'ensemble générateur 129 peut aussi bien prélever de la puissance mécanique à l'arbre basse pression 122 uniquement, à l'arbre haute pression 123 uniquement ou à la fois à l'arbre basse pression 122 et à l'arbre haute pression 123. L'ensemble générateur 129 fonctionne donc soit sur le régime de l'arbre basse pression 122, soit sur le régime de l'arbre haute pression 123, soit en hydride sur les deux régimes.

L'ensemble générateur 129 remplace ainsi un boîtier de transmission, aussi appelé boîte de relais d'accessoires ou « AGB » pour « Accessory Gear Box » en terminologie anglo-saxonne, qu'il est connu de mettre en œuvre pour entraîner mécaniquement le ou les accessoires 125, 126 en prélevant de la puissance mécanique sur l'arbre haute pression 123. Cela permet notamment de réduire les besoins de lubrification et donc de réduire le volume du réservoir d'huile. L'ensemble générateur 129 peut en outre être alimenté électriquement et commandé pour fonctionner en mode moteur, afin de remplacer avantageusement le démarreur qui habituellement entraîne mécaniquement l'arbre haute pression par l'intermédiaire d'une telle boîte de transmission.

L'ensemble générateur 129 est notamment supporté par le carter intermédiaire 117, 118, 121.

Le premier et le deuxième arbre intermédiaire 127, 128 sont par exemple coaxiaux et conçus chacun pour tourner, indépendamment l'un de l'autre, par rapport au carter 117, 118, 121, autour d'un axe intermédiaire 130. Le premier ou le deuxième arbre intermédiaire 127, 128 entoure ainsi le deuxième ou le premier arbre intermédiaire 127, 128. Dans les exemples illustrés aux figures 1 à 3, c'est le premier arbre intermédiaire 127 qui entoure le deuxième arbre intermédiaire 128.

En variante, les premier et le deuxième arbres intermédiaires 127, 128 sont agencés parallèlement l'un par rapport à l'autre et dans un même plan comprenant l'axe longitudinal 105, les premier et le deuxième arbres intermédiaires 127, 128 étant en outre axialement décalés l'un par rapport à l'autre. Selon cette variante, chacun des premier et deuxième arbres intermédiaires 127, 128 est ainsi conçu pour tourner par rapport au carter 117, 118, 121, autour d'un axe intermédiaire 130 qui lui est propre.

Le premier et le deuxième arbre intermédiaire 127, 128 sont par exemple conçus pour tourner, dans un sens de rotation opposé l'un par rapport à l'autre, par rapport au carter 117, 118, 121, autour de l'axe intermédiaire 130. En variante, le premier et le deuxième arbre intermédiaire 127, 128 sont conçus pour tourner, dans un même sens de rotation, par rapport au carter 117, 118, 121, autour de l'axe intermédiaire 130.

Les premier et le deuxième arbres intermédiaires 127, 128 s'étendent chacun suivant l'axe intermédiaire 130 entre une première extrémité 127a, 128a et une deuxième extrémité 127b, 128b opposée.

La première extrémité 127a, 128a de chacun des premier et deuxième arbres intermédiaires 127, 128 est conçue pour prélever de la puissance mécanique à l'arbre basse pression 122 ou à l'arbre haute pression 123.

Pour cela, la première extrémité 127a, 128a de chacun des premier et deuxième arbres intermédiaires 127, 128 porte par exemple une première roue dentée 127c, 128c qui est solidaire en rotation avec le premier ou le deuxième arbre intermédiaire 127, 128 autour de l'axe intermédiaire 130. La première roue dentée 127c, 128c des premier et deuxième arbres intermédiaires 127, 128 est en outre engrenée avec une roue dentée 122a, 123a elle-même portée par l'arbre basse pression 122 ou l'arbre haute pression 123 et montée solidaire en rotation sur l'arbre basse pression 122 ou sur l'arbre haute pression 123 autour de l'axe longitudinal 105.

Les premières roues dentées 127c, 128c des premier et deuxième arbres intermédiaires 127, 128 ainsi que les roues dentées 122a, 123a des arbres basse et haute pression 122, 123 sont par exemple à denture conique.

La première extrémité 127a, 128a de chacun des premier et deuxième arbres intermédiaires 127, 128 est par exemple située axialement entre les roues dentées 122a, 123a des arbres basse et haute pression 122, 123. Ainsi, lorsque les arbres basse et haute pression 122, 123 tournent dans le même sens de rotation, les premier et deuxième arbres intermédiaires 127, 128 tournent dans un sens de rotation opposé.

En variante, la première extrémité 127a, 128a de chacun des premier et deuxième arbres intermédiaires 127, 128 est située axialement d'un seul côté des roues dentées 122a, 123a des arbres basse et haute pression 122, 123. Ainsi, lorsque les arbres basse et haute pression 122, 123 tournent dans un sens de rotation opposé, les premier et deuxième arbres intermédiaires 127, 128 tournent eux-mêmes dans un sens de rotation opposé.

Les deuxièmes extrémités 127b, 128b des premier et deuxième arbres intermédiaires 127, 128 sont conçues pour transmettre, indépendamment l'une de l'autre, de la puissance mécanique à l'ensemble générateur 129.

L'ensemble générateur 129 est par exemple logé dans l'un des bras 121. De cette manière, l'ensemble générateur 129 est refroidi par le flux de gaz, dit flux secondaire, qui circule dans la veine secondaire 106.

L'ensemble générateur 129 est notamment logé dans le bras 121 situé à 6h. Cela permet d'éviter que l'ajout de masse dans le bras 121 ne vienne perturber l'équilibre statique de la turbomachine 100A, 100B, 100C, en créant un moment de la force de pesanteur par rapport à l'axe longitudinal 105, qui tendrait à faire pivoter la turbomachine 100A, 100B, 100C.

Pour cela, le premier et le deuxième arbre intermédiaire 127, 128 s'étendent par exemple depuis le cœur de la turbomachine 100A, 100B, 100C à travers la veine primaire 104 et le compartiment inter-veine 107 jusqu'au bras 121 qui traverse la veine secondaire 106 et dans lequel l'ensemble générateur 129 est logé. Ainsi, la première extrémité 127a, 128a des premier et deuxième arbres intermédiaires 127, 128 est située dans le cœur de la turbomachine 100A, 100B, 100C, tandis que leur deuxième extrémité 127b, 128b est située dans le bras 121 qui loge l'ensemble générateur 129.

Les premier et deuxième arbres intermédiaires 127, 128 sont par exemple eux-mêmes logés dans un bras (non représenté) s'étendant depuis le cœur de la turbomachine 100A, 100B, 100C jusqu'au moyeu 118, notamment jusqu'à la paroi annulaire interne 120 du moyeu 118. Le bras est agencé axialement entre le compresseur basse pression 110 et le compresseur haute pression 111.

L'ensemble générateur 129 est par exemple agencé axialement en aval des servitudes qui sont aussi logées dans le bras 121. Le bras 121 qui loge l'ensemble générateur 129 se prolonge ainsi axialement vers l'aval dans la veine secondaire 106. Cette zone de la veine secondaire 106 dans laquelle se prolonge le bras 121 est appelée « bifurcation ».

Une cloison pare-feu est par exemple prévue entre l'ensemble générateur 129 et le compartiment inter-veine 107, notamment au niveau de la paroi annulaire externe 119 du moyeu 118, de sorte à limiter le risque de feu et les transferts thermiques depuis le bras 121 qui loge l'ensemble générateur 129 vers le compartiment inter-veine 107.

Selon le premier mode de réalisation illustré à la figure 1, l'ensemble générateur 129 de la turbomachine 100A comprend un premier arbre d'entraînement 131, un ou plusieurs premiers alternateurs 132, un deuxième arbre d'entraînement 133 et un ou plusieurs deuxièmes alternateurs 134.

Le premier arbre d'entraînement 131 est conçu pour prélever de la puissance mécanique sur le premier arbre intermédiaire 127 et pour tourner, par rapport au carter 117, 118, 121, autour d'un premier axe d'entraînement 135.

Le deuxième arbre d'entraînement 133 est conçu pour prélever de la puissance mécanique sur le deuxième arbre intermédiaire 128 et pour tourner, par rapport au carter 117, 118, 121, autour d'un deuxième axe d'entraînement 136.

Les premier et deuxième arbres d'entraînement 131, 133 sont coaxiaux et conçus chacun pour tourner, indépendamment l'un de l'autre et dans un sens de rotation opposé, autour des premier et deuxième axes d'entraînement 135, 136 qui sont confondus. Le premier ou le deuxième arbre d'entraînement 131, 133 entoure ainsi le deuxième ou le premier arbre d'entraînement 133, 131. Les premier et deuxième arbres d'entraînement 131, 133 sont concentriques. Ils sont en outre contra-rotatifs. Dans l'exemple illustré à la figure 1, c'est le premier arbre d'entraînement 131 qui entoure le deuxième arbre d'entraînement 133. L'ensemble générateur 129 est ainsi moins encombrant pour une même puissance électrique produite. Cela permet en outre de limiter le maître couple du bras 121, c'est-à-dire la section maximale du bras 121, prise transversalement par rapport à l'axe longitudinal 105. Le rendement en phase de « windmilling » est amélioré lorsque c'est le premier arbre d'entraînement 131 qui entoure le deuxième arbre d'entraînement 133.

Le ou les premiers alternateurs 132 comprennent chacun un rotor inducteur monté solidaire en rotation avec l'un des premier et deuxième arbres d'entraînement 131, 133 et un rotor induit monté solidaire en rotation avec l'autre des premier et deuxième arbres d'entraînement 131, 133 et situé en regard du rotor inducteur. Les premiers alternateurs 132 sont par exemple régulièrement répartis le long des premier et deuxième arbres d'entraînement 131, 133.

De cette manière, la rotation relative du rotor inducteur du ou de chacun des premiers alternateurs 132 par rapport au rotor induit dudit premier alternateur 132 créé une variation du flux électromagnétique qui induit un courant électrique alternatif dans le rotor induit.

Par ailleurs, les rotors inducteur et induit du ou de chacun des premiers alternateurs 132 pouvant tourner dans un sens de rotation opposé l'un par rapport à l'autre, l'ensemble générateur 129 permet de produire plus de puissance électrique.

Le rotor inducteur du ou de chacun des premiers alternateurs 132 comprend par exemple au moins un aimant permanent ou au moins un électroaimant formé d'un bobinage qui est alimenté en courant continu, tandis que le rotor induit du ou de chacun des premiers alternateurs 132 comprend au moins un bobinage.

Le ou les deuxièmes alternateurs 134 comprennent chacun un rotor inducteur monté solidaire en rotation avec celui des premier et deuxième arbres d'entraînement 131, 133 qui est entouré par l'autre des premier et deuxième arbres d'entraînement 131, 133, ici le deuxième arbre d'entraînement 133, et un stator induit fixe par rapport au carter 117, 118, 121 et donc par rapport au rotor inducteur. Les deuxièmes alternateurs 134 sont par exemple régulièrement répartis le long du deuxième arbre d'entraînement 133.

De cette manière, la rotation du rotor inducteur du ou de chacun des deuxièmes alternateurs 134 par rapport au stator induit fixe dudit deuxième alternateur 134 crée une variation du flux électromagnétique qui induit un courant électrique alternatif dans le stator induit.

Le fait de multiplier les premiers alternateurs 132 et/ou les deuxièmes alternateurs 134 permet aussi de minimiser l'échauffement du générateur électrique 129, et ainsi de ne pas rendre obligatoire la mise en œuvre d'un système de refroidissement spécifiquement dédié au générateur électrique 129.

Le rotor inducteur du ou de chacun des deuxièmes alternateurs 134 comprend par exemple au moins un aimant permanent. En variante, le rotor inducteur du ou de chacun des deuxièmes alternateurs 134 comprend au moins un électroaimant formé d'un bobinage qui est alimenté en courant continu.

Le stator induit du ou de chacun des deuxièmes alternateurs 134 comprend par exemple au moins un bobinage.

Les premier et le deuxième arbres d'entraînement 131, 133 s'étendent chacun suivant les premier et deuxième axes d'entraînement 135, 136, qui sont confondus, entre une première extrémité 131a, 133a et une deuxième extrémité 131b, 133b opposée.

Les premiers et deuxièmes alternateurs 132, 134 sont agencés à des côtés opposés de celui des premier et deuxième arbres d'entraînement 131, 133 qui est entouré par l'autre des premier et deuxième arbres d'entraînement 131, 133, suivant les premier et deuxième axes d'entraînement 135, 136. Les premiers alternateurs 132 sont agencés du côté de la première extrémité 131a, 133a de celui des premier et deuxième arbres d'entraînement 131, 133 qui est entouré par l'autre des premier et deuxième arbres d'entraînement 131, 133, tandis que les deuxièmes alternateurs 134 sont agencés du côté de la deuxième extrémité 131b, 133b dudit premier ou deuxième arbre d'entraînement 131, 133. Sur la figure 1, les premiers alternateurs 132 sont agencés du côté de la première extrémité 133a du deuxième arbre d'entraînement 133, tandis que les deuxièmes alternateurs 134 sont agencés du côté de la deuxième extrémité 133b du deuxième arbre d'entraînement 133.

La première extrémité 131a, 133a de chacun des premier et deuxième arbres d'entraînement 131, 133 est conçue pour prélever de la puissance mécanique au premier ou au deuxième arbre intermédiaire 127, 128.

Pour cela, la première extrémité 131a, 133a de chacun des premier et deuxième arbres d'entraînement 131, 133 porte par exemple une première roue dentée 131c, 133c qui est solidaire en rotation avec le premier ou le deuxième arbre d'entraînement 131, 133 autour du premier ou du deuxième axe d'entraînement 135, 136. La première roue dentée 131c, 133c des premier et deuxième arbres d'entraînement 131, 133 est en outre engrenée avec une deuxième roue dentée 127d, 128d elle-même portée par la deuxième extrémité 127b, 128b du premier ou du deuxième arbre intermédiaire 127, 128 et montée solidaire en rotation sur le premier ou sur le deuxième arbre intermédiaire 127, 128 autour de l'axe intermédiaire 130.

Les premières roues dentées 131c, 133c des premier et deuxième arbres d'entraînement 131, 133 ainsi que les deuxièmes roues dentées 127d, 128d des premier et deuxième arbres intermédiaires 127, 128 sont par exemple à denture conique.

Lorsque les premier et deuxième arbres intermédiaires 127, 128 sont conçus pour tourner dans le même sens de rotation, un pignon supplémentaire est par exemple prévu pour transmettre de la puissance mécanique entre les roues dentées 127d, 131c du premier arbre intermédiaire 127 et du premier arbre d'entraînement 131 ou entre les roues dentées 128d, 133c du deuxième arbre intermédiaire 128 et du deuxième arbre d'entraînement 133, afin d'inverser le sens de rotation des premier et deuxième arbres d'entraînement 131, 133.

Les premier et deuxième axes d'entraînement 135, 136, qui sont confondus, sont coplanaires avec l'axe longitudinal 105 et/ou l'axe intermédiaire 130 des premier et deuxième arbres intermédiaires 127, 128. Ce plan commun aux axes considérés peut correspondre à un plan de symétrie de la bifurcation formée par le bras 121. Il peut être vertical ou incliné par rapport à la verticale.

Les premier et deuxième axes d'entraînement 135, 136 sont orientés globalement axialement. Ils sont sensiblement parallèles à l'axe longitudinal 105. L'orientation axiale des premier et deuxième axes d'entraînement 135, 136 vise à favoriser le prolongement axial du bras 121 qui loge l'ensemble générateur 129 dans la bifurcation, plutôt qu'une augmentation de hauteur de la veine secondaire 106. On entend par « hauteur » de la veine secondaire 106, la dimension radiale de la veine secondaire 106. Autrement dit, la hauteur de la veine secondaire 106 correspond à la distance, prise radialement par rapport à l'axe longitudinal 105, entre la virole externe 117 et la paroi annulaire externe 119 du moyeu 118. Cela permet en outre de limiter le maître couple du bras 121.

Les premières extrémités 131a, 133a des premier et deuxième arbres d'entraînement 131, 133 sont situées en amont, tandis que les deuxièmes extrémités 131b, 133b des premier et deuxième arbres d'entraînement 131, 133 sont situées en aval. Cela permet de limiter les dimensions des premier et deuxième arbres intermédiaires 127, 128 suivant l'axe intermédiaire 130.

Le ou les premiers alternateurs 132 sont situés en amont, tandis que le ou les deuxièmes alternateurs 134 sont situés en aval.

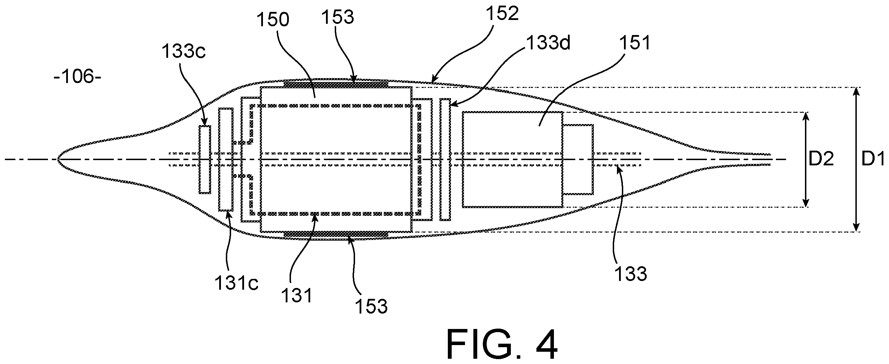

Le ou les premiers alternateurs 132 et le ou les deuxièmes alternateurs 134 peuvent respectivement être logés dans un premier boîtier 150 et dans un deuxième boîtier 151 eux-mêmes logés dans le bras 121 (figure 4). Le premier boîtier 150 présente en outre une dimension transversale D1, prise suivant une direction transversale, globalement horizontale, perpendiculaire à la dimension axiale d'écoulement des gaz, supérieure à celle D2 du deuxième boîtier 151. De cette manière, il est possible de mettre à profit le profil aérodynamique de l'arbre 121 dont la section, prise tangentiellement par rapport à l'axe longitudinal 105, est plus large en amont qu'en aval suivant la direction axiale d'écoulement des gaz, en installant des premiers alternateurs 132 plus volumineux que les deuxièmes alternateurs 134.

Le premier boîtier 150 peut encore être agencé en contact, notamment globalement tangentiel par rapport à l'axe longitudinal 105, avec ou encore affleure une paroi 152 du bras 121, de manière à améliorer le refroidissement des premiers alternateurs 132 par le flux secondaire circulant dans la veine secondaire 106. Le premier boîtier 150 est par exemple en contact avec la paroi 152 par l'intermédiaire d'une couche de matériau conducteur thermique adapté pour empêcher une usure par friction de la paroi 152 et du premier boîtier 150 et/ou pour amortir les vibrations, tel qu'un élastomère silicone. Les zones de contact entre le premier boîtier 150 et la paroi 152 du bras 121 sont référencées 153 sur la figure 4.

En variante ne formant pas partie de l'invention (non représentée), les premier et deuxième axes d'entraînement 135, 136 sont orientés globalement radialement par rapport à l'axe longitudinal 105. L'orientation radiale des premier et deuxième axes d'entraînement 135, 136 vise à favoriser l'augmentation de hauteur de la veine secondaire 106, plutôt que le prolongement axial du bras 121 qui loge l'ensemble générateur 129 dans la bifurcation. Cela permet en outre de limiter le maître couple du bras 121.

Les premières extrémités 131a, 133a des premier et deuxième arbres d'entraînement 131, 133 sont par exemple situées radialement à l'intérieur par rapport à l'axe longitudinal 105, tandis que les deuxièmes extrémités 131b, 133b des premier et deuxième arbres d'entraînement 131, 133 sont situées radialement à l'extérieur. Cela permet de limiter les dimensions des premier et deuxième arbres intermédiaires 127, 128 suivant l'axe intermédiaire 130.

En variante ne formant pas partie de l'invention (non représentée), les premier et deuxième axes d'entraînement 135, 136 sont inclinés à la fois axialement et radialement. Cela permet d'obtenir un compromis entre le prolongement axial du bras 121 qui loge l'ensemble générateur 129 dans la bifurcation et l'augmentation de la hauteur de la veine secondaire 106.

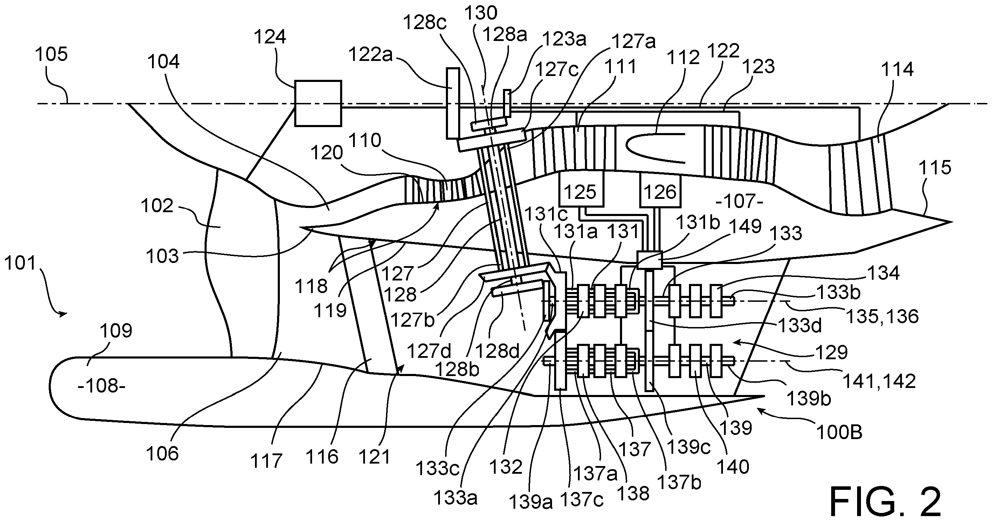

Selon le deuxième mode de réalisation illustré à la figure 2, l'ensemble générateur 129 de la turbomachine 100B comprend, en complément des premier et deuxième arbres d'entraînement 131, 133 et des premiers et deuxièmes alternateurs 132, 134, un troisième arbre d'entraînement 137, un ou plusieurs troisièmes alternateurs 138, un quatrième arbre d'entraînement 139 et un ou plusieurs quatrièmes alternateurs 140.

Le troisième arbre d'entraînement 137 est conçu pour prélever de la puissance mécanique sur le premier arbre d'entraînement 131 et pour tourner, par rapport au carter 117, 118, 121, autour d'un troisième axe d'entraînement 141.

Le quatrième arbre d'entraînement 139 est conçu pour prélever de la puissance mécanique sur le deuxième arbre d'entraînement 133 et pour tourner, par rapport au carter 117, 118, 121, autour d'un quatrième axe d'entraînement 142.

Les troisième et quatrième arbres d'entraînement 137, 139 sont coaxiaux et conçus chacun pour tourner, indépendamment l'un de l'autre et dans un sens de rotation opposé, autour des troisième et quatrième axes d'entraînement 141, 142 qui sont confondus. Le troisième ou le quatrième arbre d'entraînement 137, 139 entoure ainsi le quatrième ou le troisième arbre d'entraînement 139, 137. Les troisième et quatrième arbres d'entraînement 137, 139 sont concentriques. Ils sont en outre contra-rotatifs. Dans l'exemple illustré à la figure 2, c'est le troisième arbre d'entraînement 137 qui entoure le quatrième arbre d'entraînement 139. L'ensemble générateur 129 est ainsi moins encombrant pour une même puissance électrique produite. Cela permet en outre de limiter le maître couple du bras 121. Le rendement en phase de « windmilling » est amélioré lorsque c'est le troisième arbre d'entraînement 137 qui entoure le quatrième arbre d'entraînement 139.

Le ou les troisièmes alternateurs 138 comprennent chacun un rotor inducteur monté solidaire en rotation avec l'un des troisième et quatrième arbres d'entraînement 137, 139 et un rotor induit monté solidaire en rotation avec l'autre des troisième et quatrième arbres d'entraînement 137, 139 et situé en regard du rotor inducteur. Les troisièmes alternateurs 138 sont par exemple régulièrement répartis le long des troisième et quatrième arbres d'entraînement 137, 139.

De cette manière, la rotation relative du rotor inducteur du ou de chacun des troisièmes alternateurs 138 par rapport au rotor induit dudit troisième alternateur 138 créé une variation du flux électromagnétique qui induit un courant électrique alternatif dans le rotor induit.

Par ailleurs, les rotors inducteur et induit du ou de chacun des troisièmes alternateurs 138 pouvant tourner dans un sens de rotation opposé l'un par rapport à l'autre, l'ensemble générateur 129 permet de produire encore plus de puissance électrique.

Le rotor inducteur du ou de chacun des troisièmes alternateurs 138 comprend par exemple au moins un aimant permanent ou au moins un électroaimant formé d'un bobinage qui est alimenté en courant continu, tandis que le rotor induit du ou de chacun des troisièmes alternateurs 138 comprend au moins un bobinage.

Le ou les quatrièmes alternateurs 140 comprennent chacun un rotor inducteur monté solidaire en rotation avec celui des troisième et quatrième arbres d'entraînement 137, 139 qui est entouré par l'autre des troisième et quatrième arbres d'entraînement 137, 139, ici le quatrième arbre d'entraînement 139, et un stator induit fixe par rapport au carter 117, 118, 121 et donc par rapport au rotor inducteur. Les quatrièmes alternateurs 140 sont par exemple régulièrement répartis le long du quatrième arbre d'entraînement 139.

De cette manière, la rotation du rotor inducteur du ou de chacun des quatrièmes alternateurs 140 par rapport au stator induit fixe dudit quatrième alternateur 140 crée une variation du flux électromagnétique qui induit un courant électrique alternatif dans le stator induit.

L'ajout des troisième et quatrième arbres d'entraînement 137, 139 ainsi que des troisièmes et quatrièmes alternateurs 138, 140 permet d'augmenter la puissance électrique produite par l'ensemble générateur 129.

Le rotor inducteur du ou de chacun des quatrièmes alternateurs 140 comprend par exemple au moins un aimant permanent. En variante, le rotor inducteur du ou de chacun des quatrièmes alternateurs 138, 140 comprend au moins un électroaimant formé d'un bobinage qui est alimenté en courant continu.

Le stator induit du ou de chacun des quatrièmes alternateurs 138, 140 comprend par exemple au moins un bobinage.

Les troisième et quatrième arbres d'entraînement 137, 139 s'étendent chacun suivant les troisième ou le quatrième axes d'entraînement 141, 142, qui sont confondus, entre une première extrémité 137a, 139a et une deuxième extrémité 137b, 139b opposée.

Les troisièmes et quatrièmes alternateurs 138, 140 sont par exemple agencés à des côtés opposés de celui des troisième et quatrième arbres d'entraînement 137, 139 qui est entouré par l'autre des troisième et quatrième arbres d'entraînement 138, 140, suivant les troisième et quatrième axes d'entraînement 141, 142. Les troisièmes alternateurs 138 sont par exemple agencés du côté de la première extrémité 137a, 139a de celui des troisième et quatrième arbres d'entraînement 137, 139 qui est entouré par l'autre des troisième et quatrième arbres d'entraînement 137, 139, tandis que les quatrièmes alternateurs 140 sont agencés du côté de la deuxième extrémité 137b, 139b dudit troisième et quatrième arbres d'entraînement 137, 139. Sur la figure 1, les troisièmes alternateurs 138 sont agencés du côté de la première extrémité 137a du troisième arbre d'entraînement 137, tandis que les quatrièmes alternateurs 140 sont agencés du côté de la deuxième extrémité 139b du quatrième arbre d'entraînement 139.

La première extrémité 137a, 139a de chacun des troisième et quatrième arbres d'entraînement 137, 139 est conçue pour prélever de la puissance mécanique au premier ou au deuxième arbre d'entraînement 131, 133.

Pour cela, la première extrémité 137a, 139a de chacun des troisième et quatrième arbres d'entraînement 137, 139 porte par exemple une première roue dentée 137c, 139c qui est solidaire en rotation avec le troisième ou le quatrième arbre d'entraînement 137, 139 autour du troisième ou du quatrième axe d'entraînement 141, 142. La première roue dentée 137c, 139c des troisième et quatrième arbres d'entraînement 137, 139 est en outre engrenée avec la première roue dentée 131c, 133c du premier ou du deuxième arbre d'entraînement 131, 133, ou avec une deuxième roue dentée 133d elle-même portée par le premier ou le deuxième arbre d'entraînement 131, 133 et montée solidaire en rotation sur le premier ou sur le deuxième arbre d'entraînement 131, 133 autour du premier ou du deuxième axe d'entraînement 135, 136.

Dans l'exemple illustré à la figure 2, la première roue dentée 137c du troisième arbre d'entraînement 137 est engrenée avec la première roue dentée 131c du premier arbre d'entraînement 131, tandis que la première roue dentée 139c du quatrième arbre d'entraînement 139 est engrenée avec une deuxième roue dentée 133d du deuxième arbre d'entraînement 133.

Le cas échéant, la ou les premières roues dentées 137c, 139c des troisième et quatrième arbres d'entraînement 137, 139 qui sont en prise avec la ou les premières roues dentées 131c, 133c du premier ou du deuxième arbre d'entraînement 131, 133, sont à denture conique.

Le cas échéant, la ou les deuxièmes roues dentées 133d du premier ou du deuxième arbre d'entraînement 131, 133 sont par exemple à denture droite. La ou les premières roues dentées 137c, 139c des premier et deuxième arbres d'entraînement 131, 133 qui sont en prise avec la ou les deuxièmes roues dentées 133d du premier ou du deuxième arbre d'entraînement 131, 133, sont elles-mêmes à denture droite.

L'axe longitudinal 105 et les premier, deuxième, troisième et quatrième axes d'entraînement 135, 136, 141, 142 sont par exemple compris dans un même plan. Cela permet par exemple de tirer parti de toute la hauteur de la veine secondaire 106, sans augmenter le maître couple du bras 121.

Les premier, deuxième, troisième et quatrième axes d'entraînement 135, 136, 141, 142, qui sont parallèles entre eux dans l'exemple de la figure 2, sont par exemple coplanaires avec l'axe longitudinal 105 et/ou l'axe intermédiaire 130 des premier et deuxième arbres intermédiaires 127, 128.

Les troisième et quatrième axes d'entraînement 141, 142 sont par exemple respectivement parallèles aux premier et deuxième axes d'entraînement 135, 136.

Les troisième et quatrième axes d'entraînement 141, 142 sont par exemple orientés globalement axialement. Ils sont sensiblement parallèles à l'axe longitudinal 105.

Les premières extrémités 137a, 139a des troisième et quatrième arbres d'entraînement 137, 139 sont par exemple situées en amont, tandis que les deuxièmes extrémités 137b, 139b des troisième et quatrième arbres d'entraînement 137, 139 sont situées en aval. Cela permet de limiter les dimensions des premier et deuxième arbres intermédiaires 127, 128 suivant l'axe intermédiaire 130.

Le ou les troisièmes alternateurs 138 sont par exemple situés en amont, tandis que le ou les quatrièmes alternateurs 140 sont situés en aval.

Le ou les troisièmes alternateurs 138 et le ou les quatrièmes alternateurs 140 peuvent respectivement être logés dans le premier boîtier 150 ou un troisième boîtier lui-même logé dans le bras 121 et dans le deuxième boîtier 151 ou un quatrième boîtier lui-même logé dans le bras 121.

Le cas échéant, le troisième boîtier présente une dimension transversale, prise suivant une direction transversale, globalement horizontale, perpendiculaire à la dimension axiale d'écoulement des gaz, supérieure à celle du quatrième boîtier. De cette manière, il est possible de mettre à profit le profil aérodynamique de l'arbre 121 dont la section, prise tangentiellement par rapport à l'axe longitudinal 105, est plus large en amont qu'en aval suivant la direction axiale d'écoulement des gaz, en installant des troisièmes alternateurs 138 plus volumineux que les quatrièmes alternateurs 140.

Le cas échéant, le troisième boîtier est en contact, notamment globalement tangentiel par rapport à l'axe longitudinal 105, avec ou encore affleure la paroi 152 du bras 121, de manière à améliorer le refroidissement des troisièmes alternateurs 138 par le flux secondaire circulant dans la veine secondaire 106. Le troisième boîtier est par exemple en contact avec la paroi 152 par l'intermédiaire d'une couche de matériau conducteur thermique adapté pour empêcher une usure par friction de la paroi 152 et du troisième boîtier et/ou pour amortir les vibrations, tel qu'un élastomère silicone.

Les troisième et quatrième arbres d'entraînement 137, 139 sont par exemple situés radialement à l'extérieur par rapport à l'axe longitudinal 105, tandis que les premier et deuxième arbres d'entraînement 131, 133 sont situés radialement à l'intérieur. Cela permet aussi de limiter les dimensions des premier et deuxième arbres intermédiaires 127, 128 suivant l'axe intermédiaire 130.

En variante ne formant pas partie de l'invention (non représentée), les premier et deuxième axes d'entraînement 135, 136 sont orientés globalement radialement par rapport à l'axe longitudinal 105.

Les premières extrémités 137a, 139a des troisième et quatrième arbres d'entraînement 137, 139 sont par exemple situées radialement à l'intérieur par rapport à l'axe longitudinal 105, tandis que les deuxièmes extrémités 137b, 139b des troisième et quatrième arbres d'entraînement 137, 139 sont situées radialement à l'extérieur. Cela permet de limiter les dimensions des premier et deuxième arbres intermédiaires 127, 128 suivant l'axe intermédiaire 130.

Les troisième et quatrième arbres d'entraînement 137, 139 sont par exemple situés en aval, tandis que les premier et deuxième arbres d'entraînement 131, 133 sont situés en amont. Cela permet aussi de limiter les dimensions des premier et deuxième arbres intermédiaires 127, 128 suivant l'axe intermédiaire 130.

En variante ne formant pas partie de l'invention (non représentée), les troisième et quatrième axes d'entraînement 135, 136 sont inclinés à la fois axialement et radialement. Cela permet d'obtenir un compromis entre le prolongement axial du bras 121 qui loge l'ensemble générateur 129 dans la bifurcation et l'augmentation de la hauteur de la veine secondaire 106.

Ainsi, selon ce deuxième mode de réalisation, les premier et deuxième arbres d'entraînement 131, 133 forment une première paire d'arbres d'entraînement, tandis que les troisième et quatrième arbres d'entraînement 137, 139 forment une deuxième paire d'arbres d'entraînement. Bien sûr, une ou plusieurs paires d'arbres d'entraînement supplémentaires peuvent être prévues, telles qu'une troisième paire d'arbres d'entraînement (non représentée) prélevant de la puissance mécanique sur la deuxième paire d'arbres d'entraînement 137, 139 de la même manière que la deuxième paire d'arbres d'entraînement 137, 139 prélève de la puissance mécanique sur la première paire d'arbres d'entraînement 131, 133, ou encore une quatrième paire d'arbres d'entraînement (non représentée) prélevant de la puissance mécanique sur la troisième paire d'arbres d'entraînement de la même manière que la troisième paire d'arbres d'entraînement prélève de la puissance mécanique sur la deuxième paire d'arbres d'entraînement 137, 139, etc. La description ci-dessus reste donc applicable à ces paires d'arbres d'entraînement supplémentaires.

Selon le troisième mode de réalisation illustré à la figure 3, l'ensemble générateur 129 de la turbomachine 100C comprend un arbre interne d'entraînement 143 conçu pour tourner par rapport au carter 117, 118, 121 autour d'un axe d'entraînement 144, un arbre externe d'entraînement 145 conçu pour tourner par rapport au carter 117, 118, 121 autour de l'arbre interne d'entraînement 143 dans un sens de rotation opposé, ainsi qu'un ou plusieurs alternateurs 146. Les arbres interne et externe d'entraînement 143, 145 sont concentriques. Ils sont en outre contra-rotatifs.

L'arbre interne d'entraînement 143 est en outre conçu pour prélever de la puissance mécanique sur le premier arbre intermédiaire 127 ou sur le deuxième arbre intermédiaire 128, tandis que l'arbre externe d'entraînement 145 est conçu pour prélever de la puissance mécanique sur le deuxième arbre intermédiaire 128 ou sur le premier arbre intermédiaire 127. Dans l'exemple illustré à la figure 3, l'arbre interne d'entraînement 143 prélève de la puissance mécanique sur le premier arbre intermédiaire 127, tandis que l'arbre externe d'entraînement 145 prélève de la puissance mécanique sur le deuxième arbre intermédiaire 128.

Le ou les alternateurs 146 comprennent chacun un corps interne 146a, inducteur ou induit, monté solidaire en rotation avec l'arbre interne d'entraînement 143 et un corps externe 146b, induit ou inducteur, monté solidaire en rotation avec l'arbre externe d'entraînement 145 et situé en regard du corps interne 146a. Les alternateurs 146 sont par exemple régulièrement répartis le long des arbres interne et externe d'entraînement 143, 145.

De cette manière, la rotation relative du corps interne 146a de chacun des alternateurs 146 par rapport au corps externe 146b dudit alternateur 146 crée une variation du flux électromagnétique qui induit un courant électrique alternatif dans le corps interne 146a ou dans le corps externe 146b.

En outre, le corps interne 146a et le corps externe 146b de chacun des alternateurs 146 pouvant tourner dans un sens de rotation opposé l'un par rapport à l'autre, l'ensemble générateur 129 permet de produire plus de puissance électrique.

Le corps interne 146a des alternateurs 146 comprend par exemple au moins un aimant permanent ou au moins un électroaimant formé d'un bobinage qui est alimenté en courant continu, tandis que le corps externe 146b des alternateurs 146 comprend au moins un bobinage.

En variante (non représentée), le corps externe 146b des alternateurs 146 comprend par exemple au moins un bobinage, tandis que le corps externe 146b des alternateurs 146 comprend au moins un aimant permanent ou au moins un électroaimant formé d'un bobinage qui est alimenté en courant continu. Les arbres interne et externe d'entraînement 143, 145 s'étendent chacun suivant l'axe d'entraînement 144 entre une première extrémité 143a, 145a et une deuxième extrémité 143b, 145b opposée.

La première extrémité 143a, 145a de chacun des arbres interne et externe d'entraînement 143, 145 est conçue pour prélever de la puissance mécanique au premier ou au deuxième arbre intermédiaire 127, 128.

Pour cela, la première extrémité 143a, 145a de chacun des arbres interne et externe d'entraînement 143, 145 porte par exemple une roue dentée 143c, 145c qui est solidaire en rotation avec l'arbre interne ou externe d'entraînement 143, 145 autour de l'axe d'entraînement 144. La roue dentée 143c, 145c des arbres interne et externe d'entraînement 143, 145 est en outre engrenée avec la deuxième roue dentée 127d, 128d du premier ou du deuxième arbre intermédiaire 127, 128.

Les roues dentées 143c, 145c des arbres interne et externe d'entraînement 143, 145 ainsi que les deuxièmes roues dentées 127d, 128d des premier et deuxième arbres intermédiaires 127, 128 sont par exemple à denture conique.

Lorsque les premier et deuxième arbres intermédiaires 127, 128 sont conçus pour tourner dans le même sens de rotation, un pignon supplémentaire est par exemple prévu pour transmettre de la puissance mécanique entre les roues dentées 127d, 143c du premier arbre intermédiaire 127 et de celui des arbres interne et externe d'entraînement 143, 145 qu'il entraîne ou entre les roues dentées 128d, 145c du deuxième arbre intermédiaire 128 et de celui des arbres interne et externe d'entraînement 143, 145 qu'il entraîne, afin d'inverser le sens de rotation des arbres interne et externe d'entraînement 143, 145.

L'axe d'entraînement 144 est par exemple coplanaire avec l'axe longitudinal 105 et/ou l'axe intermédiaire 130 des premier et deuxième arbres intermédiaires 127, 128.

L'axe d'entraînement 144 est par exemple orienté globalement radialement par rapport à l'axe longitudinal 105. L'orientation radiale de l'axe d'entraînement 144 vise à favoriser l'augmentation de hauteur de la veine secondaire 106, plutôt que le prolongement axial du bras 121 qui loge l'ensemble générateur 129 dans la bifurcation. Cela permet en outre de limiter le maître couple du bras 121.

Les premières extrémités 143a, 145a des arbres interne et externe d'entraînement 143, 145 sont par exemple situées radialement à l'intérieur par rapport à l'axe longitudinal 105, tandis que les deuxièmes extrémités 143b, 145b des arbres interne et externe d'entraînement 143, 145 sont situées radialement à l'extérieur. Cela permet de limiter les dimensions des premier et deuxième arbres intermédiaires 127, 128 suivant l'axe intermédiaire 130.

En variante (non représentée), l'axe d'entraînement 144 est orienté globalement axialement. Il est sensiblement parallèle à l'axe longitudinal 105. L'orientation axiale de l'axe d'entraînement 144 vise à favoriser le prolongement axial du bras 121 qui loge l'ensemble générateur 129 dans la bifurcation, plutôt qu'une augmentation de hauteur de la veine secondaire 106.

Les premières extrémités 143a, 145a des arbres interne et externe d'entraînement 143, 145 sont par exemple situées en amont, tandis que les deuxièmes extrémités 143b, 145b des arbres interne et externe d'entraînement 143, 145 sont situées en aval. Cela permet de limiter les dimensions des premier et deuxième arbres intermédiaires 127, 128 suivant l'axe intermédiaire 130.

En variante (non représentée), l'axe d'entraînement 144 est incliné à la fois axialement et radialement. Cela permet d'obtenir un compromis entre le prolongement axial du bras 121 qui loge l'ensemble générateur 129 dans la bifurcation et l'augmentation de la hauteur de la veine secondaire 106.

Ainsi, selon ce troisième mode de réalisation, les arbres d'entraînement interne et externe 143, 145 forment une paire d'arbres d'entraînement. Bien sûr, une ou plusieurs paires d'arbres d'entraînement supplémentaires peuvent être prévues, telles qu'une deuxième paire d'arbres d'entraînement (non représentée) prélevant de la puissance mécanique sur la première paire d'arbres d'entraînement formée des arbres d'entraînement interne et externe 143, 145 de la même manière que la première paire d'arbres d'entraînement 143, 145 prélève de la puissance mécanique sur les premier et deuxième arbres intermédiaires 127, 128 ou encore une troisième paire d'arbres d'entraînement (non représentée) prélevant de la puissance mécanique sur la deuxième paire d'arbres d'entraînement de la même manière que la deuxième paire d'arbres d'entraînement prélève de la puissance mécanique sur la première paire d'arbres d'entraînement 143, 145, etc. La description ci-dessus reste donc applicable à ces paires d'arbres d'entraînement supplémentaires. L'axe longitudinal 105 et les axes d'entraînement 144 de ces paires d'arbres d'entraînement 143, 145 sont par exemple compris dans un même plan.

Des pignons intermédiaires 147, 148 peuvent en outre être prévus pour prélever de la puissance mécanique sur le premier et le deuxième arbre intermédiaire 127, 128 et pour transmettre cette puissance mécanique à la première roue dentée 131c, 133c du premier et du deuxième arbre d'entraînement 131, 133 ou à la roue dentée 143c, 145c de l'arbre interne et externe d'entraînement 143, 145. Des pignons intermédiaires 147, 148 sont par exemple illustrés à la figure 3.

Dans le cas d'un pignon supplémentaire inversant le sens de rotation des arbres interne et externe d'entraînement 143, 145, ce pignon supplémentaire s'ajoute aux pignons intermédiaires 147, 148, transmettant de la puissance mécanique soit de l'un des premier et deuxième arbres intermédiaires 127, 128 à l'un des pignons intermédiaires 147, 148, soit de l'un des pignons intermédiaires 147, 148 à l'un des arbres interne et externe d'entraînement 143, 145.

La turbomachine 100A, 100B, 100C peut en outre comprendre un système de régulation 149 par l'intermédiaire duquel l'ensemble générateur 129 délivre de l'énergie électrique à l'accessoire ou aux accessoires 125, 126.

Le système de régulation 149 est notamment conçu pour recevoir les courants électriques alternatifs produits par les premiers et deuxièmes alternateurs 132, 134, et/ou par les troisièmes et quatrièmes alternateurs 138, 140 ou par les alternateurs 146 et pour délivrer, à partir de ces courants électriques alternatifs, un courant électrique apte à faire fonctionner le ou les accessoires 125, 126.

Le système de régulation 149 est par exemple pourvue d'un organe de stockage d'énergie électrique (non représenté) conçu pour stocker l'énergie électrique produite en surplus par l'ensemble générateur 129 et pour délivrer l'énergie électrique stockée à l'accessoire ou aux accessoires 125, 126, lorsque l'énergie électrique produite par l'ensemble générateur 129 n'est pas suffisante pour alimenter le ou les accessoires 125, 126.

## Revendications

1. Turbomachine (100A, 100B, 100C) à double flux comprenant, d'amont en aval dans une direction axiale d'écoulement des gaz, une soufflante (102) et un bec de séparation (103) duquel sont issus un canal d'écoulement de flux primaire (104), dit veine primaire, et un canal d'écoulement de flux secondaire (106), dit veine secondaire, qui entoure la veine primaire (104), la turbomachine (100A, 100B, 100C) comprenant en outre :
- un carter (117, 118, 121) fixe comprenant un bras (121) qui s'étend radialement, par rapport à l'axe longitudinal (105), dans la veine secondaire (106),
- un premier arbre (122), dit arbre basse pression, conçu pour tourner par rapport au carter (117, 118, 121) autour d'un axe longitudinal (105) orienté suivant la direction axiale d'écoulement des gaz,
- un deuxième arbre (123), dit arbre haute pression, conçu pour tourner par rapport au carter (117, 118, 121) autour de l'arbre basse pression (122), les arbres haute pression (123) et basse pression (122) étant concentriques,
- au moins un accessoire (125, 126) conçu pour être entraîné par un moteur alimenté en énergie électrique,
- une partie haute par l'intermédiaire de laquelle la turbomachine (100A, 100B, 100C) est destinée à être rattachée à un aéronef,
- une partie basse opposée suivant une direction verticale orthogonale à l'axe longitudinal (105), le bras (121) s'étendant globalement verticalement, dans la partie basse, dans la veine secondaire (106),
la turbomachine (100A, 100B, 100C) comprenant :
- un premier arbre intermédiaire (127) conçu pour prélever de la puissance mécanique sur l'arbre basse pression (122),
- un deuxième arbre intermédiaire (128) conçu pour prélever de la puissance mécanique sur l'arbre haute pression (123),
- un ensemble générateur (129) d'énergie électrique logé dans le bras (121) et couplé d'une part au premier arbre intermédiaire (127) et d'autre part au deuxième arbre intermédiaire (128), de sorte à recevoir de la puissance mécanique du premier arbre intermédiaire (127) d'une part et du deuxième arbre intermédiaire (128) d'autre part, l'ensemble générateur (129) étant en outre conçu pour convertir la puissance mécanique reçue des premier et deuxième arbres intermédiaires (127, 128) en énergie électrique afin d'alimenter le ou les moteurs entraînant le ou les accessoires (125, 126), l'énergie électrique alimentant le ou les moteurs entraînant le ou les accessoires (125, 126) provenant ainsi simultanément de la puissance mécanique prélevée sur l'arbre basse pression (122) et de la puissance mécanique prélevée sur l'arbre haute pression (123),
l'ensemble générateur (129) comprenant :
- un premier arbre d'entraînement (131) conçu pour prélever de la puissance mécanique sur le premier arbre intermédiaire (127) et pour tourner par rapport au carter (117, 118, 121) autour d'un premier axe d'entraînement (135) orienté globalement suivant la direction axiale d'écoulement des gaz,
- un deuxième arbre d'entraînement (133) conçu pour prélever de la puissance mécanique sur le deuxième arbre intermédiaire (128) et pour tourner par rapport au carter (117, 118, 121) autour d'un deuxième axe d'entraînement (136) orienté globalement suivant la direction axiale d'écoulement des gaz, les premier et deuxième arbres d'entraînement (131, 133) étant coaxiaux et conçus chacun pour tourner, dans un sens de rotation opposé, autour des premier et deuxième axes d'entraînement (135, 136) alors confondus,
- un ou plusieurs premiers alternateurs (132) comprenant chacun un rotor inducteur monté solidaire en rotation avec l'un des premier et deuxième arbres d'entraînement (131, 133) autour des premier et deuxièmes axe d'entraînement (135, 136) et un rotor induit monté solidaire en rotation avec l'autre des premier et deuxième arbres d'entraînement (131, 133) autour des premier et deuxième axes d'entraînement (135, 136),
- un ou plusieurs deuxièmes alternateurs (134) comprenant chacun un rotor inducteur monté solidaire en rotation, autour des premier et deuxième axes d'entraînement (135, 136), avec celui des premier et deuxième arbres d'entraînement (131, 133) qui est entouré par l'autre des premier et deuxième arbres d'entrainement (131, 133), et un stator induit fixe par rapport au rotor inducteur dudit deuxième alternateur (134),
le ou les premiers alternateurs (132) étant situés en amont suivant la direction axiale d'écoulement des gaz et le ou les deuxièmes alternateurs (134) étant situés en aval suivant la direction axiale d'écoulement des gaz.

2. Turbomachine (100A, 100B, 100C) selon la revendication 1, dans laquelle le premier et le deuxième arbres intermédiaires (127, 128) sont coaxiaux et conçus chacun pour tourner, indépendamment l'un de l'autre, par rapport au carter (117, 118, 121) autour d'un même axe intermédiaire (130).

3. Turbomachine (100A, 100B, 100C) selon la revendication 1 ou la revendication 2, dans laquelle la veine secondaire (106) est délimitée radialement, par rapport à l'axe longitudinal (105), par une virole externe (117) et un moyeu (118) interne du carter (117, 118, 121), la virole externe (117) et le moyeu (118) étant concentriques et centrés sur l'axe longitudinal (105), et dans lequel le bras (121), qui loge l'ensemble générateur (129), s'étend radialement, par rapport à l'axe longitudinal (105), entre la virole externe (117) et le moyeu (118).

4. Turbomachine (100A, 100B, 100C) selon l'une des revendications 1 à 3, dans laquelle le bras (121) loge, en amont dans la direction axiale d'écoulement des gaz, des servitudes et, en aval dans la direction axiale d'écoulement des gaz, l'ensemble générateur (129).

5. Turbomachine (100B) selon l'une des revendications précédentes, dans laquelle l'ensemble générateur (129) comprend :
- un troisième arbre d'entraînement (137) conçu pour prélever de la puissance mécanique sur le premier arbre d'entraînement (131) et pour tourner par rapport au carter (117, 118, 121) autour d'un troisième axe d'entraînement (141),
- un quatrième arbre d'entraînement (139) conçu pour prélever de la puissance mécanique sur le deuxième arbre d'entraînement (133) et pour tourner par rapport au carter (117, 118, 121) autour d'un quatrième axe d'entraînement (142), les troisième et quatrième arbres d'entraînement (137, 139) étant coaxiaux et conçus chacun pour tourner, dans un sens de rotation opposé, autour des troisième et quatrième axes d'entraînement (141, 142) alors confondus,
- un ou plusieurs troisièmes alternateurs (138) comprenant chacun un rotor inducteur monté solidaire en rotation avec l'un des troisième et quatrième arbres d'entraînement (137, 139) autour des troisième et quatrième axes d'entraînement (141, 142) et un rotor induit monté solidaire en rotation avec l'autre des troisième et quatrième arbres d'entraînement (137, 139) autour des troisième et quatrième axes d'entraînement (141, 142),
- un ou plusieurs quatrièmes alternateurs (140) comprenant chacun un rotor inducteur monté solidaire en rotation, autour des troisième et quatrième axes d'entraînement (141, 142), avec celui des troisième et quatrième arbres d'entraînement (137, 139) qui est entouré par l'autre des troisième et quatrième arbres d'entraînement (137, 139), et un stator induit fixe par rapport au rotor inducteur dudit quatrième alternateur (140).

6. Turbomachine (100B) selon la revendication 5, dans laquelle l'axe longitudinal (105) et les premier, deuxième, troisième et quatrième axes d'entraînement (135, 136, 141, 142) sont compris dans un même plan.

7. Turbomachine (100B) selon la revendication 6, dans laquelle les troisième et quatrième axes d'entraînement (141, 142) sont respectivement parallèles aux premier et deuxième axes d'entraînement (135, 136).

8. Turbomachine (100B) selon la revendication 7, dans laquelle les troisième et quatrième arbres d'entraînement (137, 139) sont situés radialement à l'extérieur par rapport à l'axe longitudinal (105), tandis que les premier et deuxième arbres d'entraînement (131, 133) sont situés radialement à l'intérieur.

9. Turbomachine (100A, 100B) selon l'une des revendications 1 à 8, dans laquelle :
- le ou les premiers alternateurs (132) et le ou les deuxièmes alternateurs (134) sont respectivement logés dans un premier boîtier (150) et dans un deuxième boîtier (151) eux-mêmes logés dans le bras (121), le premier boîtier (150) présentant une dimension transversale, prise suivant une direction transversale, globalement horizontale, perpendiculaire à la dimension axiale d'écoulement des gaz, supérieure à celle du deuxième boîtier (151) ;
et/ou
- le ou les troisièmes alternateurs (138) et le ou les quatrième alternateurs (140) sont respectivement logés dans le premier boîtier (150) ou un troisième boîtier lui-même logé dans le bras (121) et dans le deuxième boîtier (151) ou un quatrième boîtier lui-même logé dans le bras (121), le troisième boîtier présentant une dimension transversale, prise suivant une direction transversale, globalement horizontale, perpendiculaire à la dimension axiale d'écoulement des gaz, supérieure à celle du quatrième boîtier.

10. Turbomachine (100A, 100B) selon la revendication 9, dans laquelle le premier boîtier (150) et/ou le troisième boîtier est agencé en contact avec une paroi (152) du bras (121).

11. Turbomachine (100C) selon l'une des revendications 1 à 4, dans lequel l'ensemble générateur (129) comprend :
- un arbre interne d'entraînement (143) conçu pour tourner par rapport au carter (117, 118, 121) autour d'un axe d'entraînement (144) et pour prélever de la puissance mécanique sur le premier arbre intermédiaire (127) ou sur le deuxième arbre intermédiaire (128),
- un arbre externe d'entraînement (145) conçu pour tourner par rapport au carter (117, 118, 121) autour de l'arbre interne d'entraînement (143) dans un sens de rotation opposé et pour prélever de la puissance mécanique sur le deuxième arbre intermédiaire (128) ou sur le premier arbre intermédiaire (127), les arbres interne et externe d'entraînement (143, 145) étant concentriques,
- un ou plusieurs alternateurs (146) comprenant chacun un corps interne (146a), inducteur ou induit, monté solidaire en rotation avec l'arbre interne d'entraînement (143) autour de l'axe d'entraînement (144) et un corps externe (146b), induit ou inducteur, monté solidaire en rotation avec l'arbre externe d'entraînement (145) autour de l'axe d'entraînement (144) et situé en regard du corps interne (146a).

12. Turbomachine (100C) selon la revendication 11, dans laquelle :
- l'axe d'entraînement (144) est orienté globalement radialement par rapport à l'axe longitudinal (105) ;
ou
- l'axe d'entraînement (144) est orienté globalement suivant la direction axiale d'écoulement des gaz.

## Patentansprüche

1. Zweistrom-Turbinentriebwerk (100A, 100B, 100C), das von stromaufwärts nach stromabwärts in einer axialen Richtung der Gasströmung ein Gebläse (102) und eine Trennungsnase (103) umfasst, von denen ein primärer Strömungsflusskanal (104), als primärer Strom bezeichnet, und ein sekundärer Strömungsflusskanal (106), als sekundärer Strom bezeichnet, der den primären Strom (104) umgibt, ausgehen, wobei das Turbinentriebwerk (100A, 100B, 100C) ferner Folgendes umfasst:
- ein feststehendes Gehäuse (117, 118, 121), das einen Arm (121) umfasst, der sich in Bezug auf die Längsachse (105) radial im sekundären Strom (106) erstreckt,
- eine erste Welle (122), als Niederdruckwelle bezeichnet, die dazu ausgelegt ist, sich in Bezug auf das Gehäuse (117, 118, 121) um eine Längsachse (105) herum zu drehen, die in der axialen Richtung der Gasströmung ausgerichtet ist,
- eine zweite Welle (123), als Hochdruckwelle bezeichnet, die dazu ausgelegt ist, sich in Bezug auf das Gehäuse (117, 118, 121) um die Niederdruckwelle (122) herum zu drehen, wobei die Hochdruckwelle (123) und die Niederdruckwelle (122) konzentrisch sind,
- mindestens ein Zubehörteil (125, 126), das dazu ausgelegt ist, von einem mit elektrischer Energie versorgten Motor angetrieben zu werden,
- einen oberen Abschnitt, über den das Turbinentriebwerk (100A, 100B, 100C) an einem Flugzeug befestigt werden soll,
- einen unteren Abschnitt, das in einer vertikalen Richtung, die orthogonal zur Längsachse (105) verläuft, gegenüberliegt, wobei sich der Arm (121) im unteren Abschnitt im sekundären Strom (106) im Allgemeinen vertikal erstreckt,
wobei das Turbinentriebwerk (100A, 100B, 100C) Folgendes umfasst:
- eine erste Zwischenwelle (127), die dazu ausgelegt ist, mechanische Leistung von der Niederdruckwelle (122) zu entnehmen,
- eine zweite Zwischenwelle (128), die dazu ausgelegt ist, mechanische Leistung von der Hochdruckwelle (123) zu entnehmen,
- eine elektrische Energiegeneratorbaugruppe (129), die im Arm (121) untergebracht und einerseits mit der ersten Zwischenwelle (127) und andererseits mit der zweiten Zwischenwelle (128) gekoppelt ist, um die mechanische Leistung von der ersten Zwischenwelle (127) einerseits und von der zweiten Zwischenwelle (128) andererseits aufzunehmen, wobei die Generatorbaugruppe (129) ferner dazu ausgelegt ist, die von der ersten und der zweiten Zwischenwelle (127, 128) aufgenommene mechanische Leistung in elektrische Energie umzuwandeln, um den oder die Motoren anzutreiben, die das oder die Zubehörteile (125, 126) antreiben, wobei die elektrische Energie, die den oder die Motoren mit Strom versorgt, die das oder die Zubehörteile (125, 126) antreiben, somit gleichzeitig von der mechanischen Leistung, die von der Niederdruckwelle (122) entnommen wird, und von der mechanischen Leistung, die von der Hochdruckwelle (123) entnommen wird, stammt,
wobei die Generatorbaugruppe (129) Folgendes umfasst:
- eine erste Antriebswelle (131), die dazu ausgelegt ist, mechanische Leistung von der ersten Zwischenwelle (127) zu entnehmen und sich in Bezug auf das Gehäuse (117, 118, 121) um eine erste Antriebsachse (135) herum zu drehen, die im Allgemeinen in der axialen Richtung der Gasströmung ausgerichtet ist,
- eine zweite Antriebswelle (133), die dazu ausgelegt ist, mechanische Leistung von der zweiten Zwischenwelle (128) zu entnehmen und sich in Bezug auf das Gehäuse (117, 118, 121) um eine zweite Antriebsachse (136) herum zu drehen, die im Allgemeinen in der axialen Richtung der Gasströmung ausgerichtet ist, wobei die erste und die zweite Antriebswelle (131, 133) koaxial und jeweils dazu ausgelegt sind, sich in entgegengesetzter Drehrichtung um die erste und die zweite Antriebsachse (135, 136) herum zu drehen, die dann zusammenfallen,
- einen oder mehrere erste Wechselstromgeneratoren (132), die jeweils einen induzierenden Rotor, der drehfest mit einer von der ersten und der zweiten Antriebswelle (131, 133) um die erste und die zweite Antriebsachse (135, 136) herum montiert ist, und einen induzierten Rotor umfassen, der drehfest mit der anderen von der ersten und der zweiten Antriebswelle (131, 133) um die erste und die zweite Antriebsachse (135, 136) herum montiert ist,
- einen oder mehrere zweite Wechselstromgeneratoren (134), die jeweils einen induzierenden Rotor, der drehfest um die erste und die zweite Antriebsachse (135, 136) herum mit derjenigen von der ersten und der zweiten Antriebswelle (131, 133) montiert ist, die von der anderen von der ersten und der zweiten Antriebswelle (131, 133) umgeben ist, und einen induzierten Stator umfassen, der in Bezug auf den induzierenden Rotor des zweiten Wechselstromgenerators (134) feststehend ist,
wobei sich der oder die ersten Wechselstromgeneratoren (132) stromaufwärts in der axialen Richtung der Gasströmung befinden und sich der oder die zweiten Wechselstromgeneratoren (134) stromabwärts in der axialen Richtung der Gasströmung befinden.

2. Turbinentriebwerk (100A, 100B, 100C) nach Anspruch 1, wobei die erste und die zweite Zwischenwelle (127, 128) koaxial und jeweils dazu ausgelegt sind, sich unabhängig voneinander in Bezug auf das Gehäuse (117, 118, 121) um dieselbe Zwischenachse (130) herum zu drehen.

3. Turbinentriebwerk (100A, 100B, 100C) nach Anspruch 1 oder Anspruch 2, wobei der sekundäre Strom (106) in Bezug auf die Längsachse (117) radial durch einen Außenmantel (117) und eine innere Nabe (118) des Gehäuses (117, 118, 121) begrenzt wird, wobei der Außenmantel (117) und die Nabe (118) konzentrisch und auf der Längsachse (105) zentriert sind, und wobei sich der Arm (121), in dem die Generatorbaugruppe (129) untergebracht ist, in Bezug auf die Längsachse (105) radial zwischen dem Außenmantel (117) und der Nabe (118) erstreckt.

4. Turbinentriebwerk (100A, 100B, 100C) nach einem der Ansprüche 1 bis 3, wobei im Arm (121) stromaufwärts in der axialen Richtung der Gasströmung Nebenaggregate und stromabwärts in der axialen Richtung der Gasströmung die Generatorbaugruppe (129) untergebracht sind.

5. Turbinentriebwerk (100B) nach einem der vorhergehenden Ansprüche, wobei die Generatorbaugruppe (129) Folgendes umfasst:
- eine dritte Antriebswelle (137), die dazu ausgelegt ist, mechanische Leistung von der ersten Antriebswelle (131) zu entnehmen und sich in Bezug auf das Gehäuse (117, 118, 121) um eine dritte Antriebsachse (141) herum zu drehen,
- eine vierte Antriebswelle (139), die dazu ausgelegt ist, mechanische Leistung von der zweiten Antriebswelle (133) zu entnehmen und sich in Bezug auf das Gehäuse (117, 118, 121) um eine vierte Antriebsachse (142) herum zu drehen, wobei die dritte und die vierte Antriebswelle (137, 139) koaxial und jeweils dazu ausgelegt sind, sich in entgegengesetzter Drehrichtung um die dritte und die vierte Antriebsachse (141, 142) herum zu drehen, die dann zusammenfallen,
- einen oder mehrere dritte Wechselstromgeneratoren (138), die jeweils einen induzierenden Rotor, der drehfest mit einer von der dritten und der vierten Antriebswelle (137, 139) um die dritte und die vierte Antriebsachse (141, 142) herum montiert ist, und einen induzierten Rotor umfassen, der drehfest mit der anderen von der dritten und der vierten Antriebswelle (137, 139) um die dritte und die vierte Antriebsachse (141, 142) herum montiert ist,
- einen oder mehrere vierte Wechselstromgeneratoren (140), die jeweils einen induzierenden Rotor, der drehfest um die dritte und die vierte Antriebsachse (141, 142) herum mit derjenigen von der dritten und der vierten Antriebswelle (137, 139) montiert ist, die von der anderen von der dritten und der vierten Antriebswelle (137, 139) umgeben ist, und einen induzierten Stator umfassen, der in Bezug auf den induzierenden Rotor des vierten Wechselstromgenerators (140) feststehend ist.

6. Turbinentriebwerk (100B) nach Anspruch 5, wobei die Längsachse (105) und die erste, die zweite, die dritte und die vierte Antriebsachse (135, 136, 141, 142) in derselben Ebene liegen.

7. Turbinentriebwerk (100B) nach Anspruch 6, wobei die dritte und die vierte Antriebsachse (141, 142) jeweils parallel zu der ersten und der zweiten Antriebsachse (135, 136) sind.

8. Turbinentriebwerk (100B) nach Anspruch 7, wobei sich die dritte und die vierte Antriebswelle (137, 139) in Bezug auf die Längsachse (105) radial außen befinden, während sich die erste und die zweite Antriebswelle (131, 133) radial innen befinden.

9. Turbinentriebwerk (100A, 100B) nach einem der Ansprüche 1 bis 8, wobei:
- der oder die ersten Wechselstromgeneratoren (132) und der oder die zweiten Wechselstromgeneratoren (134) jeweils in einem ersten Schutzgehäuse (150) und in einem zweiten Schutzgehäuse (151) untergebracht sind, die selbst im Arm (121) untergebracht sind, wobei das erste Schutzgehäuse (150) eine Querabmessung aufweist, genommen entlang einer im Allgemeinen horizontalen Querrichtung, die senkrecht zur axialen Abmessung der Gasströmung verläuft, die größer ist als die des zweiten Schutzgehäuses (151);
und/oder
- der oder die dritten Wechselstromgeneratoren (138) und der oder die vierten Wechselstromgeneratoren (140) jeweils im ersten Schutzgehäuse (150) oder einem dritten Schutzgehäuse, das selbst im Arm (121) untergebracht ist, und im zweiten Schutzgehäuse (151) oder einem vierten Schutzgehäuse, das selbst im Arm (121) untergebracht ist, untergebracht sind, wobei das dritte Schutzgehäuse eine Querabmessung aufweist, genommen entlang einer im Allgemeinen horizontalen Querrichtung, die senkrecht zur axialen Abmessung der Gasströmung verläuft, die größer ist als die des vierten Schutzgehäuses.

10. Turbinentriebwerk (100A, 100B) nach Anspruch 9, wobei das erste Schutzgehäuse (150) und/oder das dritte Schutzgehäuse in Kontakt mit einer Wand (152) des Arms (121) angeordnet ist.

11. Turbinentriebwerk (100C) nach einem der Ansprüche 1 bis 4, wobei die Generatorbaugruppe (129) Folgendes umfasst:
- eine innere Antriebswelle (143), die dazu ausgelegt ist, sich in Bezug auf das Gehäuse (117, 118, 121) um eine Antriebsachse (144) herum zu drehen und mechanische Leistung von der ersten Zwischenwelle (127) oder von der zweiten Zwischenwelle (128) zu entnehmen,
- eine äußere Antriebswelle (145), die dazu ausgelegt ist, sich in Bezug auf das Gehäuse (117, 118, 121) um die innere Antriebswelle (143) herum in einer entgegengesetzten Drehrichtung zu drehen und mechanische Leistung von der zweiten Zwischenwelle (128) oder von der ersten Zwischenwelle (127) zu entnehmen, wobei die innere und die äußere Antriebswelle (143, 145) konzentrisch sind,
- einen oder mehrere Wechselstromgeneratoren (146), die jeweils einen inneren Körper (146a), induzierend oder induziert, der drehfest mit der inneren Antriebswelle (143) um die Antriebsachse (144) herum montiert ist, und einen äußeren Körper (146b), induzierend oder induziert, umfassen, der drehfest mit der äußeren Antriebswelle (145) um die Antriebsachse (144) herum montiert ist und sich dem inneren Körper (146a) gegenüberliegend befindet.

12. Turbinentriebwerk (100C) nach Anspruch 11, wobei:
- die Antriebsachse (144) im Allgemeinen in Bezug auf die Längsachse (105) radial ausgerichtet ist;
oder
- die Antriebswelle (144) im Allgemeinen in der axialen Richtung der Gasströmung ausgerichtet ist.

## Claims

1. A bypass turbine engine (100A, 100B, 100C) comprising, from upstream to downstream in an axial direction of gas flow, a fan (102) and a splitter nose (103) from which originate a primary stream flow channel (104), called primary flow path, and a secondary stream flow channel (106), called secondary flow path, which surrounds the primary flow path (104), the turbine engine (100A, 100B, 100C) further comprising:
- a fixed casing (117, 118, 121) comprising an arm (121) which extends radially, relative to the longitudinal axis (105), in the secondary flow path (106),
- a first shaft (122), called low pressure shaft, designed to rotate relative to the casing (117, 118, 121) about a longitudinal axis (105) oriented in the axial direction of gas flow,
- a second shaft (123), called high pressure shaft, designed to rotate relative to the casing (117, 118, 121) around the low pressure shaft (122), the high pressure (123) and low pressure (122) shafts being concentric,
- at least one accessory (125, 126) designed to be driven by a motor powered with electrical energy,
- an upper portion via which the turbine engine (100A, 100B, 100C) is intended to be attached to an aircraft,
- an opposite lower portion in a vertical direction orthogonal to the longitudinal axis (105), the arm (121) extending generally vertically, in the lower portion, in the secondary flow path (106),
the turbine engine (100A, 100B, 100C) further comprising:
- a first intermediate shaft (127) designed to draw mechanical power from the low pressure shaft (122),
- a second intermediate shaft (128) designed to draw mechanical power from the high pressure shaft (123),
- an electrical energy generator assembly (129) housed in the arm (121) and coupled, on the one hand, to the first intermediate shaft (127) and, on the other hand, to the second intermediate shaft (128), so as to receive mechanical power from the first intermediate shaft (127), on the one hand, and from the second intermediate shaft (128), on the other hand, the generator assembly (129) being further designed to convert the mechanical power received from the first and second intermediate shafts (127, 128) into electrical energy in order to power the motor(s) driving the accessory or accessories (125, 126), the electrical energy powering the motor(s) driving the accessory or accessories (125, 126) thus originating simultaneously from the mechanical power drawn from the low pressure shaft (122) and the mechanical power drawn from the high pressure shaft (123),
the generator assembly (129) comprises:
- a first drive shaft (131) designed to draw mechanical power from the first intermediate shaft (127) and to rotate relative to the casing (117, 118, 121) about a first drive axis (135) oriented generally in the axial direction of gas flow,
- a second drive shaft (133) designed to draw mechanical power from the second intermediate shaft (128) and to rotate relative to the casing (117, 118, 121) about a second drive axis (136) oriented generally in the axial direction of gas flow, the first and second drive shafts (131, 133) being coaxial and each designed to rotate, in an opposite direction of rotation, about the first and second drive axes (135, 136) then coincident,
- one or more first alternator(s) (132) each comprising an inductor rotor mounted secured in rotation with one of the first and second drive shafts (131, 133) about the first and second drive axes (135, 136) and an induced rotor mounted secured in rotation with the other of the first and second drive shafts (131, 133) about the first and second drive axes (135, 136),
- one or more second alternators (134) each comprising an inductor rotor mounted secured in rotation, about the first and second drive axes (135, 136), with that of the first and second drive shafts (131, 133) which is surrounded by the other of the first and second drive shafts (131, 133), and an induced stator which is fixed relative to the inductor rotor of said second alternator (134),
said one or more first alternator(s) (132) being located upstream in an axial direction of gas flow and said one or more second alternator(s) (134) being located downstream in an axial direction of gas flow.

2. The turbine engine (100A, 100B, 100C) according to claim 1, wherein the first and second intermediate shafts (127, 128) are coaxial and each designed to rotate, independently of each other, relative to the casing (117, 118, 121) about the same intermediate axis (130).

3. The turbine engine (100A, 100B, 100C) according to claim 1 or claim 2, wherein the secondary flow path (106) is delimited radially, relative to the longitudinal axis (105), by an outer shroud (117) and an inner hub (118) of the casing (117, 118, 121), the outer shroud (117) and the hub (118) being concentric and centred on the longitudinal axis (105), and wherein the arm (121), which houses the generator assembly (129), extends radially, relative to the longitudinal axis (105), between the outer shroud (117) and the hub (118).

4. The turbine engine (100A, 100B, 100C) according to one of claims 1 to 3, wherein the arm (121) houses, upstream in the axial direction of gas flow, ancillaries and, downstream in the axial direction of gas flow, the generator assembly (129).

5. The turbine engine (100B) according to any of preceding claims, wherein the generator assembly (129) comprises:
- a third drive shaft (137) designed to draw mechanical power from the first drive shaft (131) and to rotate relative to the casing (117, 118, 121) about a third drive axis (141),
- a fourth drive shaft (139) designed to draw mechanical power from the second drive shaft (133) and to rotate relative to the casing (117, 118, 121) about a fourth drive axis (142), the third and fourth drive shafts (137, 139) being coaxial and each designed to rotate, in an opposite direction of rotation, about the third and fourth drive axes (141, 142) then coincident,
- one or more third alternators (138) each comprising an inductor rotor mounted secured in rotation with one of the third and fourth drive shafts (137, 139) about the third and fourth drive axes (141, 142) and an inductor rotor mounted secured in rotation with the other of the third and fourth drive shafts (137, 139) about the third and fourth drive axes (141, 142),
- one or more fourth alternators (140) each comprising an inductor rotor mounted secured in rotation, about the third and fourth drive axes (141, 142), with that of the third and fourth drive shafts (137, 139) which is surrounded by the other of the third and fourth drive shafts (137, 139), and an induced stator which is fixed relative to the inductor rotor of said fourth alternator (140).

6. The turbine engine (100B) according to claim 5, wherein the longitudinal axis (105) and the first, second, third and fourth drive axes (135, 136, 141, 142) are comprised in the same plane.

7. The turbine engine (100B) according to claim 6, wherein the third and fourth drive axes (141, 142) are respectively parallel to the first and second drive axes (135, 136).

8. The turbine engine (100B) according to claim 9, wherein the third and fourth drive shafts (137, 139) are located radially outside relative to the longitudinal axis (105), while the first and second drive shafts (131, 133) are located radially inside.

9. The turbine engine (100A, 100B) according to any of claims 1 to 8, wherein:
- the first alternator(s) (132) and the second alternator(s) (134) are respectively housed in a first housing (150) and in a second housing (151) themselves housed in the arm (121), the first housing (150) having a transverse dimension, taken in a transverse direction, generally horizontal, perpendicular to the axial dimension of gas flow, which is greater than that of the second housing (151);
and/or
- the third alternator(s) (138) and the fourth alternator(s) (140) are respectively housed in the first housing (150) or a third housing itself housed in the arm (121) and in the second housing (151) or a fourth housing itself housed in the arm (121), the third housing having a transverse dimension, taken in a transverse direction, generally horizontal, perpendicular to the axial dimension of gas flow, which is greater than that of the fourth housing.

10. The turbine engine (100A, 100B) according to claim 9, wherein which the first housing (150) and/or the third housing is arranged in contact with a wall (152) of the arm (121).

11. The turbine engine (100C) according to one of claims 1 to 4, wherein the generator assembly (129) comprises:
- an inner drive shaft (143) designed to rotate relative to the casing (117, 118, 121) about a drive axis (144) and to draw mechanical power from the first intermediate shaft (127) or from the second intermediate shaft (128),
- an outer drive shaft (145) designed to rotate relative to the casing (117, 118, 121) around the inner drive shaft (143) in an opposite direction of rotation and to draw mechanical power from the second intermediate shaft (128) or from the first intermediate shaft (127), the inner and outer drive shafts (143, 145) being concentric,
- one or more alternators (146) each comprising an inner body (146a), inductor or induced, mounted secured in rotation with the inner drive shaft (143) about the drive axis (144) and an outer body (146b), induced or inductor, mounted secured in rotation with the outer drive shaft (145) about the drive axis (144) and located facing the inner body (146a).

12. The turbine engine (100C) according to claim 11, wherein:
- the drive axis (144) is oriented generally radially relative to the longitudinal axis (105);
or
- the drive shaft (144) is oriented generally in the axial direction of gas flow.
